# EUROPEAN PATENT APPLICATION

(11) **EP 4 435 532 A1**
(43) Date of publication of application: **25.09.2024**
(21) Application number: 24153217.5
(22) Date of filing: 22.01.2024
(51) Int. Cl.: G03H 1/08, G03H 1/16, G03H 1/22

(54) **DRIVER FOR A DISPLAY DEVICE**

(30) Priority: 24.03.2023 GB 202304320
(71) Applicant: Envisics Ltd, Milton Keynes MK1 1PT (GB)
(72) Inventor: SMEETON, Timothy, Milton Keynes, MK1 1PT (GB); LIN, Ruisheng, Milton Keynes, MK1 1PT (GB)
(74) Representative: Greenaway, Martin William

(57) **Abstract**

There is provided a driver for a display device comprising a plurality of pixels. The driver is arranged to drive the display device to display a hologram of a picture on the plurality of pixels such that, when the display device is suitably illuminated, a holographic reconstruction of the picture is formed. The holographic reconstruction comprises a plurality of image points. The hologram is arranged such that each image point of the holographic reconstruction is formed using a contiguous group of pixels of the display device. Each contiguous group of pixels has a first shape comprising a first side and a second side. The first and second sides are arranged such that, if the first shape is replicated, a respective first side of a first replica of the first shape is suitable for cooperating with a respective second side of a second replica of the first shape.

## Description

### FIELD

The present disclosure relates to drivers for a display device, optical systems comprising said driver, display devices and methods of calculating a hologram. More specifically, the present disclosure relates to drivers for a display device that drive the display device to display a hologram of a picture. The hologram is arranged to form a holographic reconstruction relatively close to the display device and / or the hologram is arranged such that a Fourier transform of the hologram is suitable for replication by a hologram replicator in such a way that artifacts such as dark areas or bands are substantially reduced or minimised. Some embodiments relate to a holographic projector, picture generating unit or head-up display.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

There is disclosed herein a holographic projector comprising an optical system comprising a display device. The display device is arranged to spatially modulate light in accordance with a hologram of a picture displayed thereon. The optical system may be arranged such that the display device is illuminated with light which is spatially modulated by the display device in accordance with the hologram. The holographic projector may further comprise one or more waveguide pupil expanders. The spatially modulated light may be relayed to and coupled into a first waveguide. The first waveguide may replicate that light to expand an exit pupil of the optical system in a first direction. A second waveguide may also be provided arranged to receive the light output from the first waveguide to expand the exit pupil of the optical system in a second direction. Conceptually, the result of this may be considered the creation of an array of replicas of the display device / replicas of the hologram displayed on the display device. The array of replicas may be said to exist on a "virtual surface" which may be staggered as explained in British patent application, GB2118911.3 filed on 23 December 2021. In particular, each replica may be a different perpendicular distance from the display device owing to different path lengths in the waveguide associated with each replica. Thus, the part of the virtual surface (e.g. in the x, y dimensions) associated with each replica is offset from the display device in the perpendicular direction (e.g. in the z dimension). A virtual image of the holographic reconstruction is visible when a viewing system (such as the eye of a user) is positioned at a viewing window downstream of the waveguide/s. The virtual image may be formed at a virtual image distance upstream of the display device. Typically, the virtual image distance may be between about 1 metre and about 10 or 20 metres.

One of the advantages of the above optical system (comprising one or more waveguides) is that it increases the viewing window (i.e., a user's eye-box) in one or two dimensions, thus enabling some movement of the eye/s (or other viewing system) to occur, whilst still enabling the viewing system to see the holographic reconstruction even with a very small display device / hologram.

In the above described holographic projector, the waveguide(s) are arranged to replicate the display device. As explained in British patent application GB2302916.8 filed on 28 February 2023, such an arrangement may allow for a good quality virtual image of the holographic reconstruction *per se* (when focusing at the virtual image distance). However, other artifacts may be formed / visible. These artifacts may appear to be in front (i.e. downstream) of the virtual image of the holographic reconstruction. These artifacts may be formed at or visible on the virtual surface - that is, an area corresponding to the array of the replicas of the display device. As waveguide/s form an array of replicas, each artifact formed in a single replica will be repeated a plurality of times forming a repeating pattern of the artifact(s) at the array of the replicas of the display device. The viewing system / user at the viewing window may effectively have to look through or look past the pattern of artifacts to view the virtual image of the holographic reconstruction.

In GB2302916.8 (filed on 28 February 2023) the applicant proposed an optical system that is arranged to substantially reduce or minimise a visual impact of the virtual surface of replicas. In general terms, said optical system comprises a display device arranged to spatially modulate light in accordance with a hologram displayed thereon and to form a holographic wavefront which forms a holographic reconstruction of an image downstream of the display device. The optical system further comprises an optical component (e.g. lens) arranged to form: a) a virtual image of the holographic reconstruction; and b) an image (e.g. real image at a finite distance or virtual image at infinity) of the displayed hologram / display device. The optical component is arranged such that a magnitude of the separation of the virtual image of the holographic reconstruction and the image of the displayed hologram / display device is greater than a virtual image distance of the virtual image of the holographic reconstruction. As such, the image of the displayed hologram / display device is far removed from the virtual image of the holographic reconstruction. This was found to improve the viewing experience. In some examples, a virtual image of the display device is formed at infinity such that the effective distance between the virtual image of the display device and the virtual image of the holographic reconstruction (which is at a finite image distance) is infinite. In such examples, the (virtual image of) the display device may be referred to as being "at infinity". In other examples, a real image of the display device is formed downstream of the optical component, again far removed from the virtual image of the holographic reconstruction (which will be upstream of the optical component). In such examples, the (virtual image of) the display device may be referred to as being "beyond infinity". Thus, the optical system may be described as being arranged to form an image of the display device "at or beyond infinity". Arranging the optical component in this way advantageously significantly reduces the impact of artifacts of the virtual surface from obstructing / distracting a viewer at the viewing window. In particular, the optical component can be arranged to either form the image of the hologram / display device at infinity (far beyond the virtual image of the holographic reconstruction) or at a position downstream of the optical component (typically behind the viewing system). In either set of examples, the viewer is not required to look through or past the image of the hologram / display device to view the virtual image of the holographic reconstruction when the optical component is arranged in this way.

The above optical system can be characterised by the fact that the optical component is arranged such that a (Fourier) transform of the (relayed) hologram is coupled into a waveguide, rather than the (relayed) hologram *per se* being replicated by the waveguide (as is the convention).

After thorough simulation and experimentation, the inventors have shown that the above described optical system (replicating a transform of the hologram displayed on the display device at or beyond infinity) substantially reduces or minimises the visual impact of the virtual surface of replicas. However, the inventors identified that (new) artifacts (e.g. dark areas or bands) were present in the virtual surface (which are not present in arrangements in which the (relayed) hologram displayed on the display device *per se* is coupled into waveguide). The inventors have particularly identified that these (new) artifacts e.g. dark areas or bands are present when the hologram displayed on the display device is a point-cloud type hologram. The (new) artifacts e.g. dark areas or bands are visible to a viewer and adversely affect the viewing experience.

Furthermore, in the optical system above, a (Fourier) transform of the hologram displayed on the display device (having an image at or beyond infinity) is replicated and a virtual image of the holographic reconstruction of the hologram is formed. This requires a holographic reconstruction (or relayed holographic reconstruction) to be formed within a focal length of a lens of the optical system positioned between the holographic reconstruction and the waveguide. Meanwhile, the display device (or relayed display device) should be positioned at or (just) beyond the focal length of said lens so that, respectively, either a virtual image is formed at infinity or real image is formed downstream of the waveguide. Conventionally, a distance between the display device and a holographic reconstruction formed by the display device may be relatively large (for example, several metres). Thus, to achieve said arrangement, and to do so in a way in which the virtual image of holographic reconstruction is formed at a desired virtual image distance (e.g. at about 10 metres), the optical system may need to comprise a relatively very long optical axis and / or a lens having a relatively very long focal length. This goes against a general requirement for holographic projectors to be as compact as possible. In particular, there are generally strict requirements for the packaging size of holographic projectors that form part of a head-up display in a vehicle. Furthermore, an arrangement having a very long optical axis and / or a lens having a relatively very long focal length may result in a relatively high proportion of light to be lost from the system.

Broadly, there is provided a driver for a display device that solves one or both of the above problems. There is also provided a corresponding optical system comprising a display device and the driver, a corresponding display device, and a corresponding method of calculating a hologram, each of which solves at least one of, or at least both of, the above problems.

To solve the problem of the (new) artifacts e.g. dark areas or bands, there is provided an improved driver for a display device that is arranged to display a hologram. The hologram is arranged such that a (Fourier) transform of the hologram has a (physical) shape or footprint. Said shape is arranged such that replicas of the shape (or Fourier transform of the hologram) have a relatively high packing density. In some embodiments, the shape or footprint of the Fourier transform of the hologram is different to the shape of footprint of the (displayed) hologram pattern itself. As used herein, the shape of the (Fourier) transform of the hologram refers to a shape defined by a perimeter of the (Fourier) transform of the hologram. As used herein, the packing density refers to an optimized packing density, optionally in a square lattice or square coordination geometry, optionally in a rectangular lattice or rectangular coordination geometry. The relatively high packing density may be a packing density of 90% (filled) or greater, optionally 95% (filled) or greater, optionally 99% (filled) or greater.

After thorough simulation and experimentation, the inventors have identified that the (new) dark areas or bands may be caused when the (Fourier) transform of the hologram is replicated, rather than being caused by the hologram *per se.* In more detail, the inventors have identified that this is because conventional display devices have a square or rectangular shape. Thus, conventional display devices (or holograms displayed on said display devices) can be replicated in such a way that the virtual surface appears substantially continuous when viewed in a x-y plane (such that the staggering in the z-direction - mentioned above - is not apparent). This is because replicas of a rectangle or square can be arranged such that there are substantially no gaps between the replicas and so have a high packing density (as high as 100%). In the absence of gaps / given the substantially continuous appearance of the virtual surface (when viewed in the x-y plane), said dark areas or bands are not present. In other words, in arrangements in which the waveguide is arranged to replicate the display device or hologram per se such that the virtual surface formed by the one or more waveguides is a replica of the display device, it is the shape of the display device that is important for achieving an apparently substantially continuous virtual surface (when viewed in the x-y plane).

The inventors have found that this relationship between the shape of the display device and the ability to achieve a substantially continuous virtual surface (when viewed in the x-y plane) does not hold when the waveguide is arranged to replicate a (Fourier) transform of the hologram.

Instead, it is the shape of the (Fourier) transform of the hologram that is important. The inventors have surprisingly found that the shape of the pattern representing the (Fourier) transform of the hologram depends on how the hologram was calculated.

In some embodiments, the inventors have found that the (Fourier) transform of the hologram has a circular shape. In particular, when the hologram displayed on a display device is a point cloud hologram (that is, a hologram determined by a point cloud method), the inventors have found that the important hologram domain information of the (Fourier) transform of the hologram is generally contained within a circular area. In other words, the hologram pattern tends to adopt a substantially circular shape. The inventors have identified that the problem with this is that, when a circular pattern is replicated, the gaps between adjacent replicas formed by the hologram replicator have a detrimental effect on the viewing experience. Specifically, the surprising shape of the transformed pattern means there will be gaps between adjacent replicas (even when the circular replicas are positioned in an optimized packing arrangement) formed by the hologram replicator. For example, it can mathematically be shown that the optimized packing density of equally sized circles in a square lattice is 78.54%. The gaps between the replicas may appear as dark areas or bands on the virtual surface which, the inventors have identified, distract a typical human viewer from the view of the virtual image of the holographic reconstruction upstream thereof. The appearance of these dark area or bands was unexpected and the inventors only identified the problem of these dark bands because of the unconventional optical system they have developed (in which a transform of a hologram is replicated). The inventors have recognised that the dark bands could be reduced or even eliminated if the Fourier transform of the hologram has a shape that is more suitable for providing an improved packing density (relative to the packing density of similarly sized circles).

After simulation and experimentation, the inventors have found that, in at least some forms of holography (for example point cloud holography), the shape of the Fourier transform of the hologram can be controlled by the shape of sub-hologram used to form each image point of the holographic reconstruction. Conventionally, circular sub-holograms are used to form each image point of a holographic reconstruction. In more detail, a hologram may be calculated such that a holographic reconstruction is formed when the hologram is suitably illuminated. The holographic reconstruction may be formed as a point cloud image. The point cloud image may comprise a plurality of image points. The hologram may be calculated such that each image point is formed by a sub-area of the hologram. Each sub-area may be referred to as a sub-hologram. In some examples, the display device may comprise a plurality of pixels. In such cases, each image point may be associated with a contiguous group of pixels of the display device. Each contiguous group of pixels may display a particular sub-hologram. In the calculation of the sub-hologram for each image point, an area on the display device can be defined by tracing straight line paths from the image point to the display device. It is conventional to use straight line paths having an angle with respect to a normal of the display device that is substantially equal to the diffraction angle of light cones emitted from the display device. The straight line paths may substantially define a light cone which results in a substantially circular area being defined on the display device. The sub-area may be referred to as the footprint on the display device of the light cone. So, typically, each footprint / sub-hologram / contiguous group of pixels may have a substantially circular shape. The inventors have found that this results in the (Fourier) transform of the hologram also adopting a substantially circular shape. Because of the convenience of calculating the sub-hologram using light cones having an angle equal to the diffraction angle of display device (such that a circular footprint is defined on the display device), this has become the norm in the technical field. Despite this, the inventors have recognised that it is possible to use non-circular sub-holograms to influence the distribution of information within the (Fourier) transform of the calculated hologram. Specifically, the inventors have found that this technique of influencing the shape of the sub-holograms can be used to reduce or eliminate the human perception of dark bands in the virtual surface. In particular, the sub-holograms may have a first shape comprising a first side and an opposing second side, wherein the first and second sides are arranged such that, if the first shape is replicated, a respective first side of a first replica of the first shape is suitable for cooperating with / fitting into / interlocking with a respective second side of a second replica of the first shape. This advantageously provides a shape that has a relatively high packing density / reduces or eliminates darks bands (as described above).

To solve the problem of providing a compact holographic projector, there is provided a driver for a display device which is arranged to display a hologram which forms a holographic reconstruction relatively close to the display device (and downstream of the display device). It may be said that the image distance from the display device to the holographic reconstruction is relatively short, for instance ranging from tens of millimetres down to sub-millimetre image distances. As used herein, a relatively close distance (corresponding to the distance between the display device and the formed holographic reconstruction) may be 20 millimetres or less, optionally 10 millimetres or less, optionally 5 millimetres or less. In some embodiments, the distance may be between 2.5 millimetres and 10 millimetres. These distances may be in the absence of a lens (or other optical component) between the display device and the holographic reconstruction. Such distances between the display device and the holographic reconstruction may allow for the display device (or a relayed display device) to be positioned at or beyond the focal plane of a lens and the holographic reconstruction be formed within the focal plane of the lens while also allowing for the virtual image distance of the holographic reconstruction to be within a desired range (for example, about 10 metres) and while allowing for a relative compact optical system. The inventors have found that small changes (in particular, increases) in the distance between the display device and the holographic reconstruction have a disproportionate effect on size of the optical system (in particular, the size / focal length of the lens).

It is unconventional to need to reduce the distance between the display device and a holographic reconstruction formed downstream of the display device (in the absence of a lens). For example, in arrangements in which a virtual surface consisting of replicas of the hologram per se is formed, there is no need for the holographic reconstruction to be formed close to the display device. In fact, it is usual for the holographic reconstruction to be formed downstream of the waveguide, typically downstream of the virtual surface, typically several meters downstream of the display device.

The inventors have recognised that the distance from the display device to the holographic reconstruction may be controlled in the calculation of the hologram. For example, in at least some forms of holography (for example point cloud holography), the distance between the display device and the holographic reconstruction is dependent on the size of a sub-hologram used to form each image point of the holographic reconstruction and the on diffraction angle of the system. In particular, the smaller the sub-hologram (for a given diffraction angle), the shorter the distance between the display device and the holographic reconstruction. However, it was not expected that the sub-hologram could be made small enough to provide a distance between the display device and the holographic reconstruction that allows for a compact holographic projector (with a relatively short optical axis) (suitable for a head-up display in a vehicle) while maintaining good image / holographic reconstruction quality. This is because the number of pixels used to form each point of the holographic reconstruction reduces as the size of each sub-hologram area reduces (assuming the pixel density of the display device remains the same).

Most display devices for displaying a hologram (e.g. pixellated spatial light modulators) have a relatively large numbers of pixels, for example millions of pixels. The generally accepted practice in the field of image formation is to use as many pixels of the display device as possible to form the image (or holographic reconstruction in accordance with embodiments of the present disclosure). For example, it is common for each pixel (of the million or more pixels) of the display device to contribute to each image point of a holographic reconstruction. Even in examples in which not all pixels of the display device contribute to all image points (for example, in some point cloud techniques) it is still common to maximise the number of pixels of the display device that contribute to each image point such that the number of pixels contributing to each image point may be in the hundreds of thousands, or even millions (depending on the total number of pixels of the display device). This is because, conventionally, there is no strict minimum limit on the distance between display device and a holographic reconstruction formed downstream of the display device, and image quality is typically a function of (e.g. proportional to) the number of display pixels used. As above, said projection or image distance may conventionally be of the order of one or two metres, rather than 20 millimetres or less. So, there is a general prejudice in the technical field that the number of display pixels used to contribute to each image point should be high / maximised. There was an expectation that using the low number of pixels necessary to achieve the above short distances between the display device and the holographic reconstruction would result in low quality holographic reconstructions. For example, it was expected that, with fewer pixels available to form each image point, not enough information would be available to encode light to form a good quality image point. However, despite this prejudice and after thorough simulation and experimentation, the inventors have been able to form a good quality holographic reconstruction even when the number of pixels contributing to each image point / holographic reconstruction point is as low as 30 pixels (for example). This goes against the prejudice in the field (in which, as above, it unconventional to form a holographic reconstruction so close to a display device).

The inventors have found that a good quality holographic reconstruction can be formed relatively close to the display device when each sub-hologram of each image point (of a hologram) comprises contiguous group of pixels comprising less than 100,000 pixels, optionally less than 25,000 pixels, optionally less than 5,000 pixels, optionally less than 1,000 pixels, optionally less than 500 pixels, optionally less than 200 pixels, optionally less than 100 pixels. Such contiguous groups of pixels may be shaped as described above (e.g. non-circular) to form a correspondingly shaped (e.g. non-circular) holographic reconstruction to minimise or eliminate dark bands, as described above.

As a result of the findings of the inventors, a compact holographic projector may be realised with a 6F optical configuration as described herein.

As used herein, the terms "upstream" and "downstream" may be used to describe the relative positions of features, elements or components of an optical system, or (real or virtual) images or holographic reconstructions formed by the optical system, with reference to the direction of propagation of light through the optical system. For example, in an optical system in which light propagates to a first component and then a second component, the first component may be described as being upstream of the second component and the second component may be described as being downstream of the first component. A virtual image formed by an optical component may be described as being formed upstream of the respective optical component. A real image formed by an optical component may be described as being formed downstream of the respective optical component.

In a first aspect, there is provided a driver for a display device comprising a plurality of pixels. The driver is arranged to drive the display device to display a hologram of a picture on the plurality of pixels such that, when the display device is suitably illuminated, a holographic reconstruction of the picture is formed. The holographic reconstruction comprises a plurality of image points. The hologram is arranged such that each image point of the holographic reconstruction is formed using a contiguous group of pixels of the display device. In some embodiments, each image point corresponds to (i.e. is formed by) a different contiguous group of pixels of the display device - although there may be partial overlap between some of all contiguous groups. Each contiguous group of pixels has a first shape. The first shape comprises a first side and a second side. The first and second sides are arranged such that, if the first shape is replicated, a respective first side of a first replica of the first shape is suitable for cooperating with a respective second side of a second replica of the first shape. The first and second sides may said to have complementary (e.g. matching or pairing) shapes.

As used herein, the first side and the second side "cooperating" with one another means, for example, that the first side has a shape that corresponds with second side such that the first side of a first replica of the first shape may abut with, interlock with or fit into the second side of a second replica of the first shape. This may be the case when the first and second replicas of the first shape are adjacent to one another and when the first and second replicas are similarly orientated and sized. More generally, the first and second side cooperating with one another may mean that that a gap between the respective first and second sides of the first and second replicas of the first shape can be minimized or substantially zero. Thus, when first and second sides of two replicas of the first shape are arranged in cooperation it may be said that the two replicas are substantially contiguous in a first direction (e.g. a direction orthogonal to the first and second sides).

The inventors have surprisingly found that the shape of a (Fourier) transform of a hologram is effected by the shape of the contiguous groups of pixels used to form each image point. In particular, the inventors have found that a shape of a (Fourier) transform of a hologram (optionally, a shape of a perimeter defined by / of said (Fourier) transform of the hologram) substantially corresponds to the shape used for each contiguous group of pixels. The shape of the (Fourier) transform of the hologram corresponding to the shape of the contiguous group of pixels may mean herein that the shape of the (Fourier) transform of the hologram is at least congruent to the shape of the contiguous groups of pixels. The shape of the (Fourier) transform of the hologram may also be orientated substantially identically to the shape of each contiguous group of pixels. The shape of the (Fourier) transform of the hologram may be scaled differently to the shape of each contiguous group of pixels. The shape of a (Fourier) transform of the holographic reconstruction formed downstream of the display device may also have a shape that corresponds to the shape of each of the contiguous groups of pixels.

Because of a general relationship between the shape of the contiguous groups of pixels used to form each image point and the shape of the (Fourier) transform of the hologram / (Fourier) transform of the holographic reconstruction, and because each contiguous group of pixels has the first shape, the (Fourier) transform of the hologram / holographic reconstruction may have a shape corresponding to the first shape. Thus, the shape of the (Fourier) transform of the hologram / holographic reconstruction (having a shape corresponding to the first shape) may be such that, if the (Fourier) transform of the hologram / holographic reconstruction is replicated by a hologram replicator, a respective first side of a first replica of the (Fourier) transform of the hologram / holographic reconstruction is suitable for co-operating with (e.g. fitting into or interlocking with) a respective second side of a second replica of the (Fourier) transform of the hologram / holographic reconstruction. This co-operation may be such that a gap between the respective first and second sides of adjacent first replica and second replicas of the (Fourier) transform of the hologram / holographic reconstruction is minimized or substantially zero. As used herein, a shape of a (Fourier) transform of the hologram is referred to. It should be understood that, because the shape of the (Fourier) transform of the hologram influences the (Fourier) transform of the holographic reconstruction, features described in relation to the shape of (Fourier) transform of the hologram may broadly apply equally to the shape of the (Fourier) transform of the holographic reconstruction.

Another way of defining the first aspect is as follows. A driver for a display device comprising a plurality of pixels is provided. The driver is arranged to drive the display device to display a hologram of a picture on the plurality of pixels such that, when the display device is suitably illuminated, a holographic reconstruction of the picture is formed. The holographic reconstruction comprises a plurality of image points and the hologram is arranged such that each image point of the holographic reconstruction is formed using a contiguous group of pixels of the display device. Each contiguous group of pixels has a first shape. A (Fourier) transform of the hologram has a shape corresponding to the first shape. In other words, the (Fourier) transform of the hologram has a second shape corresponding to the first shape. The (second) shape of the (Fourier) transform of the hologram (corresponding to the first shape) is such that, if the (Fourier) transform of the hologram is replicated by a hologram replicator, a respective first side of a first replica of the (Fourier) transform of the hologram is suitable for co-operating with (e.g. fitting into or interlocking with) a respective second side of a second replica of the (Fourier) transform of the hologram. The shape of the (Fourier) transform of the hologram may such that a gap between the respective first and second sides of the adjacent first replica and second replicas of the (Fourier) transform of the hologram may be minimised or substantially zero.

The hologram replicator may be such that the first and second replicas are similarly orientated. The hologram replicator may be such that the first and second replicas are substantially similarly sized. The hologram replicator may be a waveguide. The waveguide may be arranged to receive a holographic wavefront. The waveguide may comprise a pair of reflective surfaces. The waveguide may be arranged to waveguide the holographic wavefront between said pair of reflective surfaces. One surface of the pair of reflective surfaces may be partially transmissive such that a plurality of replicas of the holographic wavefront. The waveguide may be described as expanding an exit pupil in a first direction. As such, the first and second replicas may be adjacent one another along the first direction.

The first shape may be a shape that is suitable for providing a packing density of 90% (filled) or greater, optionally 95% (filled) or greater, optionally 99% (filled) or greater when replicated. Advantageously, each of these packing densities is higher than the packing density of a circle shape. As the (Fourier) transform of the hologram has a shape significantly corresponding to the first shape, the hologram replicator may be arranged such that replicas of the (Fourier) transform of the hologram have a correspondingly high packing density. The packing density may be an optimized packing density. The packing density may be in a square lattice or square coordination geometry. The packing density may be in a rectangular lattice or rectangular square coordination. Such high packing densities may mean that dark bands in a virtual surface formed by replicas having the first shape are minimised, or substantially or completely eliminated.

The first and second sides of the first shape may oppose one another. When the (Fourier) transform of the hologram is replicated by a hologram replicator in a first direction, a separation between the first and second sides of the first shape may be parallel to the first direction.

The first shape may be substantially non-circular. Optionally, the first shape is additionally substantially non-elliptical. Thus, the holographic reconstruction may have a substantially non-circular shape and, optionally, substantially non-elliptical.

The first shape may be a shape that is suitable for monohedral tessellation. Herein, the first shape being suitable for (monohedral) tessellation means that the first shape is suitable for forming a substantially continuous surface when replicated and the replicas are suitably arranged. Herein, the tessellation being monohedral means that the first shape is suitable for forming the substantially continuous surface when only the first shape is replicated and suitably arranged (in other words, tiles of another shape may not be used to form the substantially continuous surface). An additional or special requirement may be placed on the tessellation. Specifically, the first shape may be suitable for monohedral tessellation having the (additional or special) requirement that the first shape is suitable for forming the substantially continuous surface when replicated along a first direction, each replica being similarly orientated and sized. The first shape may also be suitable for forming the substantially continuous surface when replicated along a second direction. The second direction may be orthogonal to the first direction.

The first shape may be a shape that is suitable for forming a continuous surface when the first shape is replicated in a first direction. The continuous surface may comprise replicas of the first shape that fit together or abut one another. This first shape may be suitable for forming the continuous surface without overlap of replicas. It may be said that the replicas forming the continuous surface are contiguous in the first direction. The continuous surface may be substantially continuous in at least the first direction. The continuous surface may have a width in the second direction. The width of the surface in the second direction may be substantially equal to or greater than a width of the first shape in the second direction. The first shape may be a shape that is suitable for forming the continuous surface when each replica of the first shape is translated with respect to adjacent replicas of the first shape.

In other words, the first shape is a shape that is suitable for forming a continuous surface when similarly orientated and sized replicas of the first shape are used to form the surface. This may be such that there are no gaps or spaces between the replicas of the first shape forming the plane. The replicas forming the continuous surface may be suitable for forming that continuous surface without substantial overlap. It may be said that the replicas are tessellated or tiled in the first direction.

As above, the first shape may comprise a first side and a second side arranged such that, if the first shape is replicated, a respective first side of a first replica of the first shape is suitable for cooperating with a respective second side of a second replica of the first shape. Thus, in some embodiments, the first shape comprises a first side and an opposing second side, wherein the first side has a shape which corresponds to the second side such that the first side is suitable for fitting into / interlocking with the second side.

In some embodiments, the first shape may comprise a third side and a fourth side arranged such that, if the first shape is replicated, a respective third side of a first replica of the first shape is suitable for cooperating with a respective fourth side of a second (or third) replica of the first shape. The third and the fourth sides of the first shape may be separated in a second direction which is substantially perpendicular to the first direction (described above). The advantage of providing a first shape comprising two pairs of corresponding sides (separated in orthogonal / perpendicular directions to one anther) means that the first shape is suitable for replication of the first shape in both the first and second dimensions with minimal gaps / dark bands between the replicas. Thus, the first shape is suitable for replication to form a two dimensional array of replicas of the first shape that appears substantially continuous.

In some embodiments, the first shape have a quadrilateral shape. In some embodiments, the first shape has a rectangular or square shape.

In some embodiments, a perimeter of the (Fourier) transform of the hologram has a second shape. The second shape substantially corresponds to the first shape such that the perimeter of the (Fourier) transform of the hologram delimits a shape that substantially corresponds to the shape of each of the contiguous groups of pixels. The first shape and the second shape may be congruent and similarly orientated.

In some embodiments, each contiguous group of pixels comprises less than 5% of the total number of pixels of the display device, optionally less than 2% of the total number of pixels of the display device. In some embodiments, each contiguous group of pixels comprises less than 100,000 pixels, optionally less than 25,000 pixels, optionally less than 5,000 pixels, optionally less than 1,000 pixels, optionally less than 500 pixels, optionally less than 200 pixels, optionally less than 100 pixels. As will be described in more detail in a later aspect, this may advantageously result in the holographic reconstruction being formed relatively close to the display device. For example, the hologram may be arranged such that a distance between the display device and the holographic reconstruction is 20 millimetres or less, optionally 10 millimetres or less, optionally 5 millimetres of less. In some embodiments, each contiguous group of pixels may overlap with one or more of the (other) contiguous groups.

In some embodiments, the holographic reconstruction is formed as a point cloud image.

In a second aspect, there is provided an optical system having a viewing window. The optical system comprises a display device. The display device is arranged to be driven by a driver defined in the first aspect. The optical system may comprise a driver as defined in the first aspect to drive the display device. The display device may be a pixelated display device. The display device may be a spatial light modulator such as a liquid crystal on silicon spatial light modulator. The display device is further arranged to spatially modulate light in accordance with the hologram displayed thereon to form a holographic wavefront. The holographic wavefront forms the holographic reconstruction downstream of the display device. In other words, the hologram is arranged such that the spatially modulated light is spatially modulated in such a way as to form the holographic reconstruction downstream of the display device. The optical system further comprises a hologram replicator such as a waveguide. The hologram replicator may be arranged to provide a plurality of replicas of a (Fourier) transform of the hologram. For example, if the holographic replicator is a waveguide, the waveguide may be arranged to receive a holographic wavefront and waveguide the holographic wavefront between a pair of reflective surfaces thereof. One surface of the pair of reflective surfaces is partially transmissive such that a plurality of replicas of the holographic wavefront are emitted therefrom.

As described above, the driver of the first aspect is arranged to drive the display device of the optical system to display a hologram such that each image point of a holographic reconstruction formed by hologram is associated with a contiguous group of pixels of the display device having a first shape such the holographic reconstruction has a shape corresponding to the first shape. The first shape may be a shape that is suitable for providing a relatively high packing density. The hologram replicator / waveguide may be arranged such that the replicas of the holographic wavefront are formed substantially adjacent one another such that, at the viewing window, a virtual surface of replicas is formed with substantially minimized / eliminated dark bands.

In some embodiments, the optical system further comprises an optical component or optical element between the holographic reconstruction and the waveguide. The optical component or element may be a (physical) (imaging) lens such as Fourier lens. For example, the optical component may be a Fourier lens. The optical component (Fourier lens) may comprise a front focal plane and a back focal plane. The front focal plane may be referred to as an object plane and the back focal plane may be referred to as a Fourier transform plane. The optical component may be arranged to form, at the back (Fourier) plane, a Fourier transform of the light / object/ image at the front (object) plane. The optical component is arranged to form a virtual image of the holographic reconstruction upstream of the display device.

In some embodiments, a back focal plane of the optical component is coupled to the waveguide. As used herein, the back (Fourier) plane being coupled to the waveguide may mean that the back focal plane of the optical component coincides (i.e. is substantially coincident) with the input of the waveguide. In some embodiments, the back (Fourier) plane is adjacent to / overlaps with an incoupling port of the waveguide. In some embodiments, the back (Fourier) plane is within the waveguide. For example, the back (Fourier) plane may be between the pair of reflective surfaces of the waveguide. In this way, the optical component may be arranged such that a Fourier transform of the light / object / image at the front (object) plane of the optical component is coupled into the waveguide.

In some embodiments, the optical component may be arranged to perform a space-frequency transform such that a transformed displayed (or relayed) hologram is coupled into the waveguide. As used herein, a transformed displayed hologram means a hologram predominantly or entirely in the frequency domain. The space-frequency transform may be a Fourier transform. In other words, the optical component may be arranged such that a Fourier transform of a hologram is coupled into the waveguide. In some embodiments, the optical component may be arranged such that a Fourier transform of the hologram displayed on the display device is coupled into the waveguide. This may be the case, for example, when the optical component is arranged to form an image of the displayed hologram at infinity. The optical component may be arranged such that the wavefront coupled into the waveguide is a (Fourier) transform of a holographic wavefront encoding the picture.

In some embodiments, the optical system is arranged to perform an odd number of (frequency-time) transforms / Fourier transforms to light propagating between the display device and the waveguide (e.g. one or three transforms between the frequency domain and the time domain / one or threes Fourier transforms). In this way, the wavefront may be said to be in the frequency domain when it is coupled into the waveguide (even if it has undergone multiple - an odd number - of transforms between the space domain and the frequency domain when propagating from the display device to the waveguide). For example, the optical system may comprise a plurality of components arranged to perform a Fourier transform (e.g. a plurality of Fourier transform lenses). The optical component described above may be a (single) Fourier transform lens. As described below, the optical system may further comprise an optical relay comprising a pair of Fourier lenses. The optical system may be arranged such that each of the pair of Fourier lenses of the optical relay and the optical component perform a frequency-time transform / Fourier transform in turn.

In some embodiments, the optical system further comprises the optical relay between the display device and the waveguide. The optical relay may be between the display device and the optical component (referred to above, e.g. lens). The optical relay may comprise two lenses arranged in cooperation to form a relayed holographic reconstruction. In such embodiments, the lens that forms said optical component may be referred to as a third lens. The relayed holographic reconstruction is an image of the holographic reconstruction formed by the hologram displayed on the display device. The two lenses of the optical relay may comprise a first lens and a second lens. The first lens of the optical relay may be closer to the display device than the second lens of the optical relay. A distance between the first lens of the optical relay and the second lens of the optical relay may be substantially equal to the sum of the focal length of the first lens and the focal length of the second lens. In some embodiments, the focal length of the first lens of the optical relay is equal to the focal length of the second lens of the optical relay. In other embodiments, the focal length of the first lens of the optical relay is different to the focal length of the second lens of the optical relay. In such embodiments, the optical relay may have a magnifying (or demagnifying) effect on the relayed holographic reconstruction and / or the relayed hologram. The optical relay may be referred to as a telescope (e.g. a magnifying or demagnifying telescope). When a distance between the first lens of the optical relay and the second lens of the optical relay is substantially equal to the sum of the focal length of the first lens and the focal length of the second lens, the optical relay may be referred to as a "4f" system. This may be because a distance between a front focal plane of the first lens and a back focal plane of the second lens is equal to four focal lengths. When the focal length of the first and second lenses is the same, the distance between a front focal plane of the first lens and a back focal plane of the second lens may be equal to four times the focal length of either of the first and second lens. In some embodiments, the first lens comprises a front focal plane and a back focal plane and the second lens comprises a front focal plane and a back focal plane. In some embodiments, the display device may be positioned substantially at the front focal plane of the first lens of the optical relay. In some embodiments, the back focal plane of the first lens of the optical relay may be substantially coincident with the front focal plane of the second lens of the optical relay. The back focal plane of the first lens of the optical relay may be substantially parallel to the front focal plane of the second lens of the optical relay. The back focal plane of the first lens of the optical relay may be substantially co-planar to the front focal plane of the second lens of the optical relay.

In some embodiments, the optical system is arranged such that a distance between the holographic reconstruction and the optical component is less than a focal length of the optical component such that the image of the holographic reconstruction is a virtual image formed upstream of the display device.

In embodiments comprising an optical relay, the optical system may be arranged such that a distance between the relayed holographic reconstruction and the optical component is less than a focal length of the optical component such that the virtual image of the holographic reconstruction formed by the optical component is a virtual image of the relayed holographic reconstruction. In other words, rather than directly forming a virtual image of the holographic reconstruction formed by the hologram on the display device, the optical element may be arranged to (directly) form a virtual image of the relayed holographic reconstruction.

Thus, in embodiments, a distance between the holographic reconstruction or the relayed holographic reconstruction and the optical component is less than a focal length of the optical component such that the image of the holographic reconstruction is a virtual image formed upstream of the display device. In embodiments, an image distance of the holographic reconstruction is less than infinite, for example less than 30 meters.

In some embodiments, the optical component (e.g. third lens) is further arranged to form an image of the displayed hologram at infinity or downstream of the optical component. The image of the displayed hologram at infinity may be at infinity upstream of the display device (i.e. for behind the display device). Arranging the optical component in this way advantageously significantly reduces the impact of artifacts of the virtual surface from obstructing / distracting a viewer at the viewing window. When the image of the hologram / display device is formed either at infinity (far beyond the virtual image of the holographic reconstruction) or at a position downstream of the optical component (typically behind the viewing system), the viewer may not be required to look through or past the image of the hologram / display device to view the virtual image of the holographic reconstruction when the optical component is arranged in this way. This significantly improves the viewing experience. Specifically, artifacts (such as a non-uniform intensity pattern of dark bands) in the image of the hologram / display device, are much less of a distraction. The viewing system / eye / brain may be able to more effectively ignore the artifacts when at said image distances.

In a third aspect, there is provided a display device comprising a plurality of pixels. The display device is arranged to display a hologram of a picture on the plurality of pixels such that, when the display device is suitable illuminated, a holographic reconstruction of the picture is formed. The display device is arranged such that each image point is formed using a contiguous group of pixels of the display device. Each contiguous group of pixels has a first shape as described in relation to the first aspect. For example, the first shape may comprise a first side and an (opposing) second side. The first and second sides of the first shape may be arranged such that, if the first shape is replicated, a respective first side of a first replica of the first shape is suitable for cooperating with (e.g. fitting into / interlocking with) a respective second side of a second replica of the first shape. Another way of defining this is as follows. A (Fourier) transform of the hologram has a shape corresponding to the first shape. The shape of the (Fourier) transform of the hologram (having a shape corresponding to the first shape) is such that, if the (Fourier) transform of the hologram is replicated by a hologram replicator (such as a waveguide), a respective first side of a first replica of the (Fourier) transform of the hologram is suitable for co-operating with (e.g. fitting into / interlocking with) a respective second side of a second replica of the (Fourier) transform of the hologram. The first shape / shape of the (Fourier) transform of the hologram may be such that a gap between the respective first and second sides of adjacent first replica and second replicas of the (Fourier) transform of the hologram is minimized / substantially zero. In embodiments, the first shape may be a substantially non-circular shape.

The display device may be a spatial light modulator such as a liquid crystal on silicon spatial light modulator.

In a fourth aspect, there is provided a method of calculating a hologram of a picture for an optical system comprising a display device arranged to display the hologram, the picture comprising a plurality of image points. The method comprises the steps of: for each image point of the picture, defining an area on the display device using straight line paths from the image point to the display device. The method further comprises determining a sub-hologram for each image point and displaying the sub-hologram on the respective area of the display. Each area on the display device has a first shape as described in relation to the first aspect. For example, the first shape may comprise a first side and an (opposing) second side. The first and second sides of the first shape may be arranged such that, if the first shape is replicated, a respective first side of a first replica of the first shape is suitable for cooperating with (e.g. fitting into / interlocking with) a respective second side of a second replica of the first shape. Another way of defining this is as follows. The (Fourier) transform of the hologram has a shape corresponding to the first shape. The shape of the (Fourier) transform of the hologram (having a shape corresponding to the first shape) is such that, if the (Fourier) transform of the hologram is replicated by a hologram replicator (such as a waveguide), a respective first side of a first replica of the (Fourier) transform of the hologram is suitable for co-operating with (e.g. fitting into / interlocking with) a respective second side of a second replica of the (Fourier) transform of the hologram. The first shape / shape of the (Fourier) transform of the hologram may be such that a gap between the respective first and second sides of adjacent first replica and second replicas of the (Fourier) transform of the hologram is minimized / substantially zero. In embodiments, the first shape may be a substantially non-circular shape.

In some embodiments, each area comprises a contiguous group of pixels. The step of displaying the sub-hologram comprises displaying the sub-hologram on the respective contiguous group of pixels. Each contiguous group of pixels may overlap with one or more other contiguous groups of pixels.

In a fifth aspect, there is provided a driver for a display device comprising a plurality of pixels. The driver is arranged to drive the display device to display a hologram of a picture on the plurality of pixels such that, when the display device is suitably illuminated, a holographic reconstruction of the picture is formed. The holographic reconstruction comprises a plurality of image points and the hologram is arranged such that each image point of the holographic reconstruction is formed using a contiguous group of pixels of the display device. Each contiguous group of pixels comprises less than 5% of the total number of pixels of the display device, optionally less than 2% of the total number of pixels of the display device.

In some embodiments, each contiguous group of pixels comprises less than 100,000 pixels, optionally less than 25,000 pixels, optionally less than 5,000 pixels, optionally less than 1,000 pixels, optionally less than 500 pixels, optionally less than 200 pixels, optionally less than 100 pixels. In some embodiments, the total number of pixels of the display device is at least 1 million pixels, optionally at least 2 million pixels.

Conventionally, much larger numbers of pixels of the display device are used to form each image point (for example, in point cloud holography). The inventors have recognised that by using such relatively small areas on the display device to form each image point, the holographic reconstruction can be formed relatively very close to the display device. For example, in some embodiments, the hologram is arranged such that a distance between the display device and the holographic reconstruction is 20 millimetres or less, optionally 10 millimetres or less, optionally 5 millimetres or less. In some embodiments, the distance between the display device and the holographic reconstruction is less than a width and / or a height of the display device. Optionally, a width or height of a display area of the display device, wherein the display device comprises the plurality of pixels arranged in an array. The key advantage of being able to form the holographic reconstruction so close to the display device is that the optical system can be made compact (the optical axis of the optical system being relatively short) while still achieving an arrangement in which the holographic reconstruction is formed within a focal length of the lens, while the display device is at or beyond the focal length of the lens. As described above, such an arrangement advantageously significantly reduces the impact of artifacts of the virtual surface from obstructing / distracting a viewer at the viewing window. However, such arrangements are unconventional. It is particularly unconventional to have constraints on both the position of the display device and the position of the holographic reconstruction with respect to a lens and so the inventors were faced with an unusual problem when trying to implement such an arrangement in a compact way. Furthermore, the technical field is prejudiced against forming a holographic reconstruction so close to the display device by using few display pixels to form each image point because of concerns of loss of quality of the holographic reconstruction. The generally held view is that high numbers of pixels per image point are needed to form high quality holographic reconstructions. So, the inventors have gone against the prejudice of the technical field and surprisingly found / shown through simulation and experimentation that a good quality holographic reconstruction can be achieved using a relatively low number of display pixels per image point.

Typically, a holographic reconstruction comprises areas having displayed content and areas without displayed content. This is particularly common in augmented reality configurations, for example in head-up displays in vehicles, where some content is overlaid on the real world but other areas are left without content. The inventors have found that an additional advantage of using a relatively low number of display pixels per image point is that the resulting holographic reconstruction typically has better contrast between the areas in which content is displayed and areas in which content is not displayed. As above, the convention is for each pixel of the displayed hologram to contribute to multiple, if not all, of the pixels / points of the holographic reconstruction. This may result in some spatially modulated light contributing to non-content areas of the reconstruction, potentially lowering the contrast between the content and non-content areas of the reconstruction. This may be reduced or substantially avoided in an arrangement in which a relatively low number of display pixels per image point are used.

As above, each contiguous group of pixels may be relatively small. For example, each contiguous group of pixels may have a width (defined on the display device) that is less than or equal to 10 millimetres, optionally less than or equal to 5 millimetres, optionally less than or equal to 2 millimetres, optionally less than or equal to 1 millimetre. In some embodiments, a distance between the display device and the holographic reconstruction is less than or equal to half of a width of at least one of the contiguous group of pixels divided by the trigonometric tangent of a maximum diffraction angle of the display device. Thus, based on said width values and typical maximum diffraction angles of display devices (for example, spatial light modulators), the distance between the display device and the holographic reconstruction may be relatively short (e.g. 20 millimetre or less).

In some embodiments, each contiguous group of pixels has the first shape, as described in the first aspect. For example, the first shape may comprise a first side and an (opposing) second side. The first and second sides of the first shape may be arranged such that, if the first shape is replicated, a respective first side of a first replica of the first shape is suitable for cooperating with (e.g. fitting into / interlocking with) a respective second side of a second replica of the first shape. Another way of defining this is as follows. A (Fourier) transform of the hologram has a shape corresponding to the first shape. The shape of the (Fourier) transform of the hologram (having a shape corresponding to the first shape) is such that, if the (Fourier) transform of the hologram is replicated by a hologram replicator (such as a waveguide), a respective first side of a first replica of the (Fourier) transform of the hologram is suitable for co-operating with (e.g. fitting into / interlocking with) a respective second side of a second replica of the (Fourier) transform of the hologram. The first shape / shape of the (Fourier) transform of the hologram may be such that a gap between the respective first and second sides of adjacent first replica and second replicas of the (Fourier) transform of the hologram is minimized / substantially zero. In embodiments, the first shape may be a substantially non-circular shape.

In some embodiments, the holographic reconstruction is formed as a point cloud image. In some embodiments, the hologram is a point cloud hologram.

In some embodiments, each contiguous group of pixels may overlap with one or more of the (other) contiguous groups.

In a sixth aspect, there is provided an optical system having a viewing window. The optical system comprises a display device arranged to be driven by a driver as described in the fifth aspect. In some embodiments, the optical system comprises a driver as described in the fifth aspect. The display device is arranged to spatially modulate light in accordance with the hologram displayed thereon to form a holographic wavefront. The holographic wavefront forms the holographic reconstruction downstream of the display device. The optical system further comprises a waveguide arranged to receive the holographic wavefront and waveguide the holographic wavefront between a pair of reflective surfaces thereof. One surface of the pair of reflective surfaces is partially transmissive such that a plurality of replicas of the holographic wavefront are emitted therefrom.

In some embodiments, the optical system further comprises an optical component between the holographic reconstruction and the waveguide, wherein the optical component is arranged to form a virtual image of the holographic reconstruction upstream of the display device.

In some embodiments, a back focal plane of the optical component is coupled to the waveguide.

In some embodiments, a distance between the holographic reconstruction and the optical component is less than a focal length of the optical component such that the image of the holographic reconstruction is a virtual image formed upstream of the display device.

In some embodiments, the optical system further comprises an optical relay between the display device and waveguide / optical component. The optical relay may comprise two lens arranged in cooperation to form a relayed holographic reconstruction. The relayed holographic reconstruction may be an image of the holographic reconstruction formed by the hologram displayed on the display device. A distance between the relayed holographic reconstruction and the optical component may be less than a focal length of the optical component such that the virtual image of the holographic reconstruction formed by the optical component is a virtual image of the relayed holographic reconstruction.

The optical component may be arranged such that the holographic wavefront coupled into the waveguide is a transform of a holographic wavefront encoding the picture, optionally a Fourier transform of the holographic wavefront.

In a seventh aspect, there is provided a display device comprising a plurality of pixels. The display device is arranged to display a hologram of a picture on the plurality of pixels such that, when the display device is suitably illuminated, a holographic reconstruction of the picture is formed comprising a plurality of image points. The display device is arranged such that each image point is formed using a contiguous group of pixels of the display device. Each contiguous group of pixels comprises less than 5% of the total number of pixels of the display device, optionally less than 2% of the total number of pixels of the display device. In some embodiments, each contiguous group of pixels comprises less than 100,000 pixels, optionally less than 25,000 pixels, optionally less than 5,000 pixels, optionally less than 1,000 pixels, optionally less than 500 pixels, optionally less than 200 pixels, optionally less than 100 pixels.

In an eighth aspect, there is provided a method of calculating a hologram of a picture for an optical system comprising a pixelated display device arranged to display the hologram, the picture comprising a plurality of image points. The method comprises the step of, for each image point, defining an area on the display device using straight line paths from the image point to the display device. The method further comprises the step of determining a sub-hologram for each image point and displaying the sub-hologram on the respective area of the display. Each area on the display device comprises a contiguous group of pixels, each contiguous group comprising less than 5% of the total number of pixels of the display device, optionally less than 2% of the total number of pixels of the display device. In some embodiments, each contiguous group of pixels comprises less than 100,000 pixels, optionally less than 25,000 pixels, optionally less than 5,000 pixels, optionally less than 1,000 pixels, optionally less than 500 pixels, optionally less than 200 pixels, optionally less than 100 pixels.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6 is a cross-sectional schematic view of the optical components of an optical system;
Figure 7 is a cross-sectional schematic view of the optical components of another optical system, the optical system comprising an optical relay and being arranged to form a virtual image of a relayed hologram at infinity;
Figure 8 shows a cross-sectional schematic ray diagram showing features of the optical system of Figure 7;
Figure 9 is a cross-sectional schematic view of the optical components of yet another optical system, the optical system comprising an optical relay and being arranged to form a real image of a relayed hologram;
Figure 10 shows a cross-sectional schematic ray diagram showing features of the optical system of Figure 9;
Figure 11 shows a schematic view of an extended modulator comprising a plurality of replicas of a display device, each replica having a substantially rectangular shape;
Figure 12 shows a schematic view of an extended modulator comprising a plurality of replicas of a Fourier transform of a hologram, each replica having a substantially circular shape;
Figure 13 shows a close-up view of four replicas of Figure 12;
Figure 14 shows a schematic view of an extended modulator comprising a plurality of replicas of Fourier transform of a hologram, each replica having a substantially square shape;
Figure 15 shows a close-up view of four replicas of Figure 14;
Figure 16 shows a schematic view of an extended modulator comprising a plurality of replicas of Fourier transform of a hologram, each replica having an irregular shape;
Figure 17 shows a close-up view of four replicas of Figure 16;
Figure 18 represents a point cloud-type hologram calculation in which circular wavelets are used;
Figure 19 represents a point cloud-type hologram calculation in which square wavelets are used;
Figure 20 is a schematic view of a portion of a phase-only hologram calculated using a point cloud-type hologram technique utilising circular wavelets; and
Figure 21 is a schematic view of a portion of a phase-only hologram calculated using a point cloud-type hologram technique utilising square wavelets.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

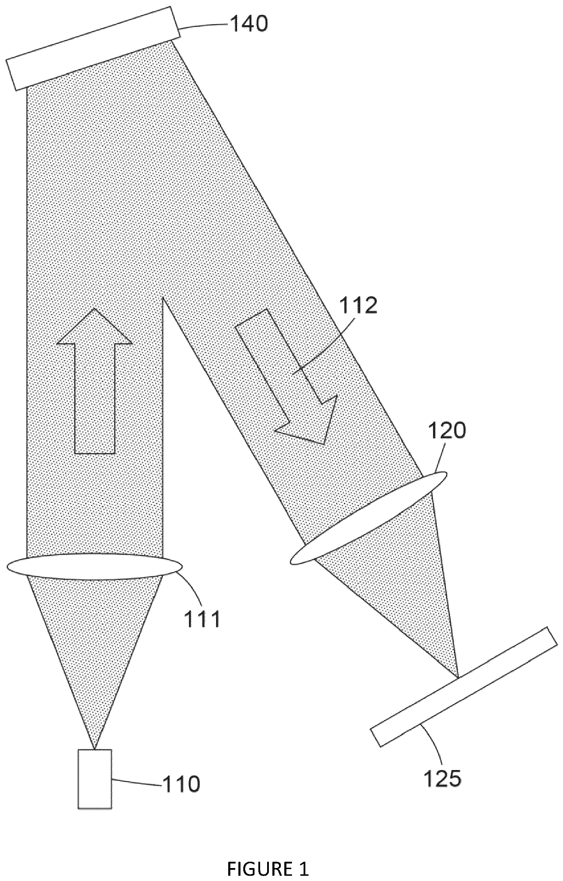

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not a* one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are precalculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is `visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an `display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

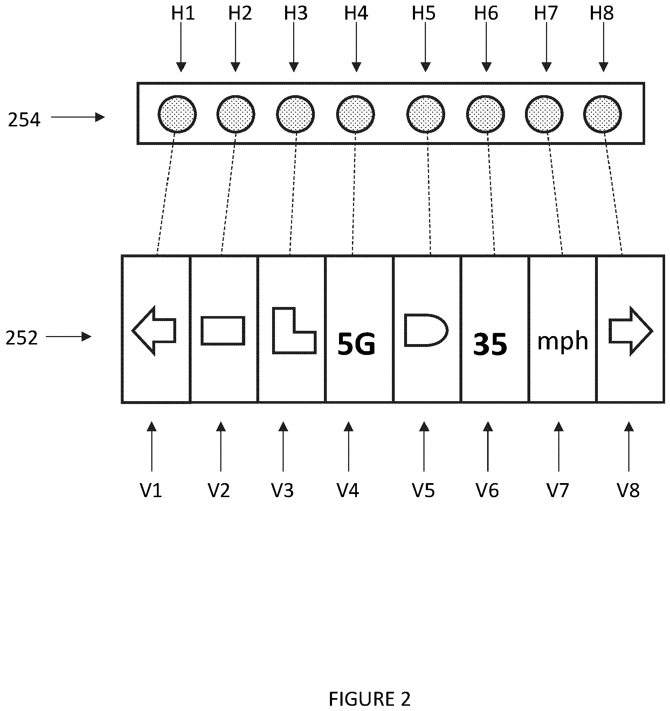

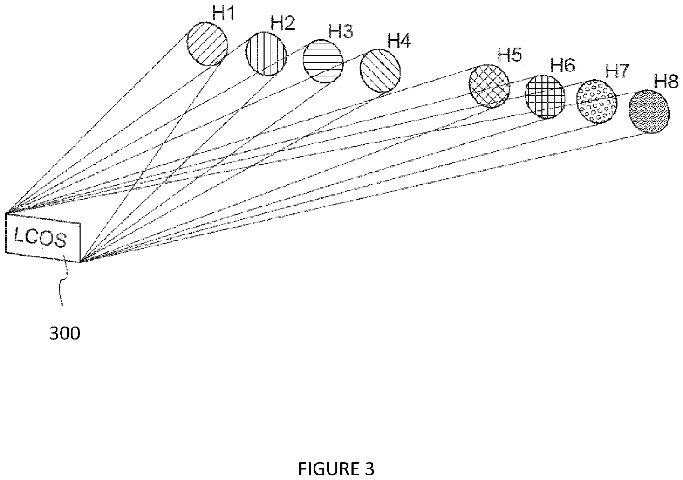

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

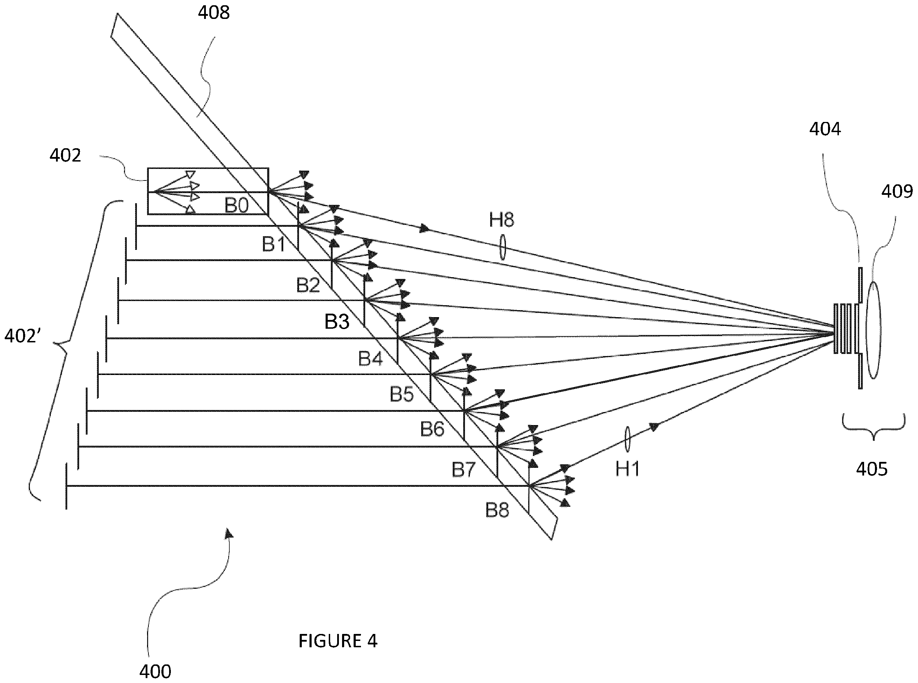

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

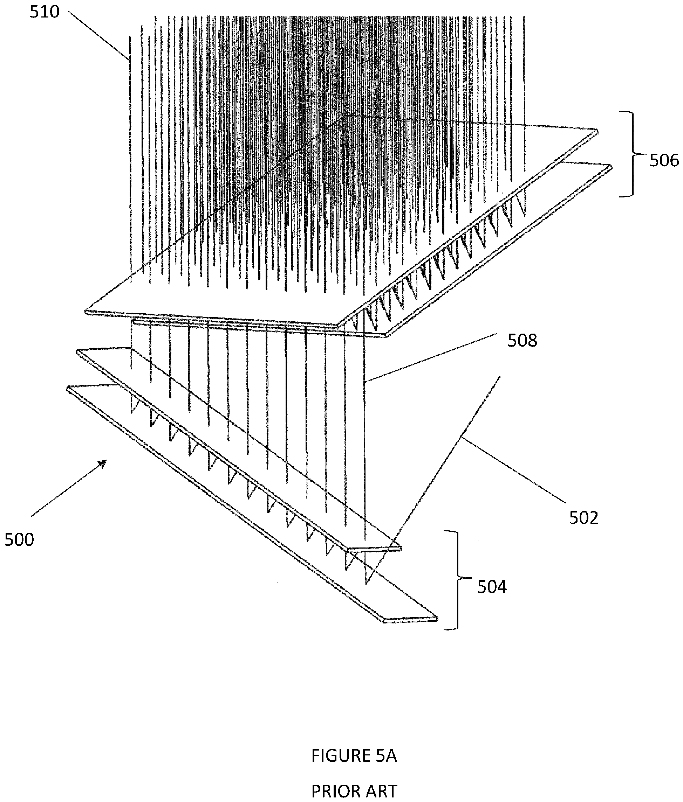

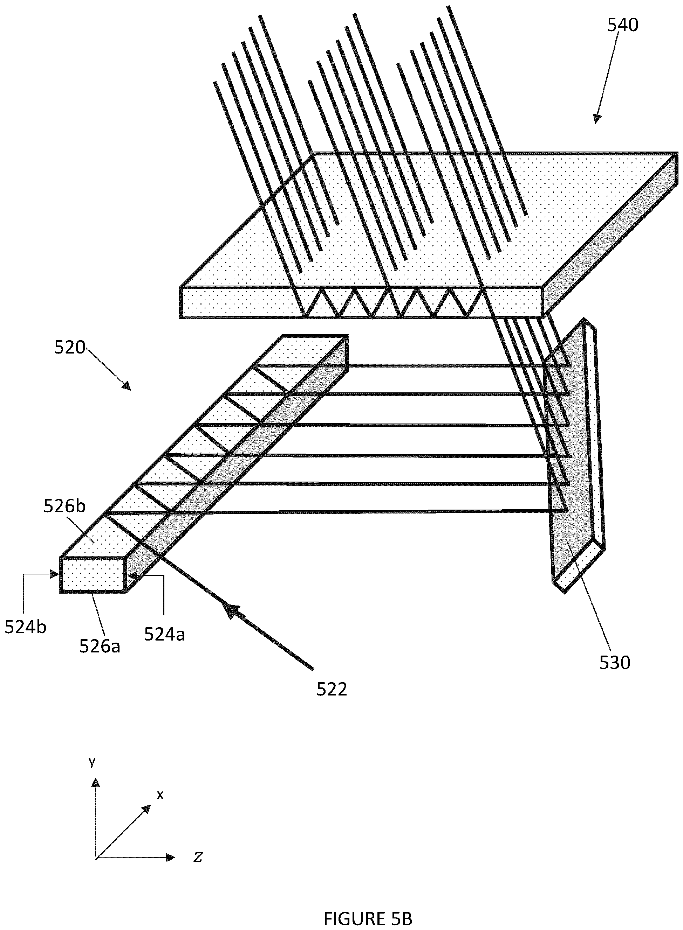

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator- more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the deliver of hologram light channels, and their replicas, to the eye-box. Each aperture or window may comprise a plurality of liquid crystal cells or pixels.

### Image Formation

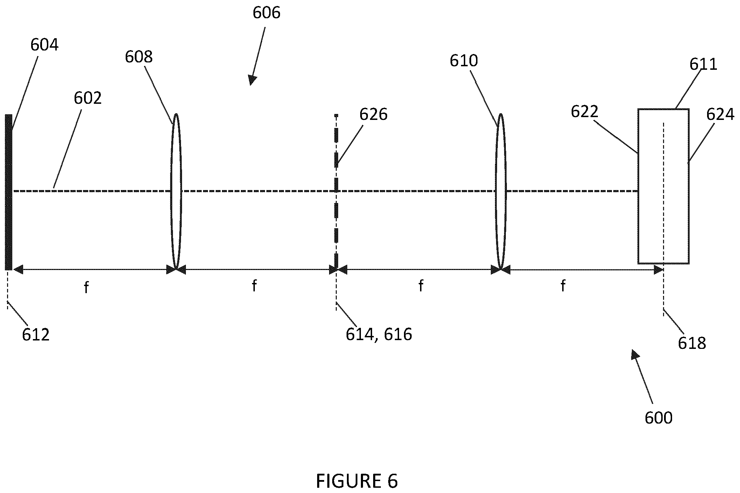

Figure 6 is a cross-sectional schematic view of the optical components of an optical system 600 in which a relayed hologram is coupled into and replicated by a waveguide 611.

An optical axis of the optical system 600 is shown by dotted line 602 in Figure 6. The optical system 600 comprises a display device 604 which, in this example, is a liquid crystal on silicon spatial light modulator. The display device 604 is arranged to display a hologram of a picture. Downstream of the display device 604 is an optical relay 606. The optical relay 606 comprises a first lens 608 and a second lens 610. The optical system 600 further comprises a waveguide 611 downstream of the second lens 610 of the optical relay 606. The waveguide 611 comprises a pair of opposing surfaces 622, 624 arranged to provide waveguiding of light therebetween in accordance with the previously described examples.

The first lens 608 of the optical relay 606 comprises a front focal plane 612 and a back focal plane 614. The front focal plane 612 is upstream of the first lens 608 and the back focal plane 614 is downstream of the first lens 608. The second lens 608 of the optical relay 606 comprises a front focal plane 616 and a back focal plane 618. The front focal plane 616 is upstream of the second lens 610 and the back focal plane 618 is downstream of the second lens 610. Normals of the front and back focal planes of each of the first and second lenses 608, 610 are parallel to the optical axis 602 and a distance from each of the front and back focal planes to the respective first or second lens is equal to the focal length f of the respective lens. In this example, the display device 604 is positioned substantially at the front focal plane 612 of the first lens 608. In this example, the front focal plane 616 of the second lens 610 is substantially coplanar with the back focal plane 614 of the first lens 608. In this example, the waveguide 611 is arranged such that back focal plane 618 of the second lens 610 is between the first and second surfaces of the waveguide 622, 624. In the example shown in Figure 6, the focal length f of the first and second lenses 608, 610 is the same. As such, the optical relay forms a 4f system (i.e. the length of the optical relay is equal to four times the focal length of either the first and second lens 608, 610). However, in other embodiments, the focal length of the first lens 608 may be different to the focal length of the second lens 610. In such cases, the optical relay may form a magnifying (or demagnifying) telescope.

The optical system 600 further comprises a coherent light source such as a laser. The coherent light source is not shown in Figure 6. In operation of the optical system 600, the coherent light is arranged to illuminate the display device 604. Said light may thus be spatially modulated in accordance with the hologram of the picture displayed on the display device. The spatially modulated light may be received by the first lens 608 and relayed to the second lens 610. A holographic reconstruction 626 of the picture is formed at the back focal plane 612 of the first lens 608, between the first and second lenses 608, 610. The second lens 610 relays the spatially modulated light to the waveguide 611. As described in relation to earlier Figures, the waveguide 611 replicates the light received from the display device so as to form a plurality of replicas or copies of the hologram displayed on display device 604 such that each replica comprises light spatially modulated in accordance with the hologram on the display device. In embodiments, the optical system further comprises a second waveguide (not shown in the drawings) to provide waveguiding and replication in a second direction such that a two-dimensional array of replicas is output by the second waveguide. The spatially modulated light is relayed from the output of the second waveguide to an eye-box / viewing plane (which is expanded as a result of replication achieved by the waveguides). When a viewing system (such as the eye of a user) is placed at the eye-box / at the viewing plane, the viewing system receives the spatially modulated light which forms a virtual image of the picture of the hologram displayed on the display device at a virtual image distance which is encoded in the hologram.

The optical system 600 is able to provide a good virtual image of the picture of the hologram when a viewing system is positioned in the viewing plane / eye-box. However, artifacts may be formed / appear at the viewing plane (i.e. the plane comprising the plurality of replicas). The artifacts may comprise dark bands resulting from the display device being illuminated with non-uniform intensity light and / or may result from the physical features of the display device (for example, scattering off features of the display device). In any case, the artifacts may be replicated by the waveguide(s) to form a repeating pattern of the artifacts at the viewing plane. Thus, while the virtual image of the picture / holographic reconstruction per se may be good quality, the view of the virtual image of the picture at the viewing plane may appear obstructed by the repeating pattern of artifacts. The viewing system may have to effectively "look through" the repeating pattern of artifacts to observe the virtual image.

### Separation of hologram image and holographic reconstruction image

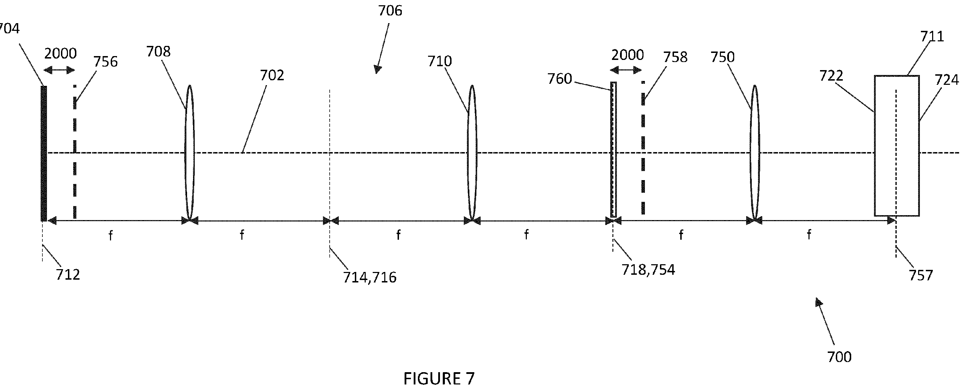

Figure 7 is a cross-sectional schematic view of the optical components of a first optical system 700 which is arranged such that an image of the hologram / display device is far removed from a virtual image of a holographic reconstruction of the hologram, thus reducing or eliminating the appearance of the above-described artifacts. The first optical system 700 is arranged such that a Fourier transform of the hologram displayed on the display device 704 is coupled into the waveguide 711 (rather than the hologram per se). As explained below, this is because of the presence of a lens 750 between a relayed hologram and the waveguide 711.

The optical system 700 comprises an optical axis represented by dotted line 702 in Figure 7. The optical system 700 comprises a display device 704 which, in this example, is a liquid crystal on silicon spatial light modulator. The display device 704 is arranged to display a hologram of a picture. Downstream of the display device 704 is an optical relay 706. The optical relay 706 comprises a first lens 708 and a second lens 710.

The display device 704 and the optical relay 706 of the optical system 700 are very similar to the display device 604 and optical relay 706 of the optical system 600. For example, the first lens 708 of the optical relay 706 comprises a front focal plane 712 and a back focal plane 714. The front focal plane 712 is upstream of the first lens 708 and the back focal plane 714 is downstream of the first lens 708. The second lens 708 of the optical relay 706 comprises a front focal plane 716 and a back focal plane 718. The front focal plane 716 is upstream of the second lens 710 and the back focal plane 718 is downstream of the second lens 710. Normals of the front and back focal planes of each of the first and second lenses 708, 710 are parallel to the optical axis 702 and a distance from each of the front and back focal planes to the respective first or second lens is equal to the focal length f of the respective lens. In this example, the display device 704 is positioned substantially at the front focal plane 712 of the first lens 708. In this example, the front focal plane 716 of the second lens 710 is substantially coplanar with the back focal plane 714 of the first lens 708. In the example shown in Figure 7, the focal length f of the first and second lenses 708, 710 is the same. As such, the optical relay forms a 4f system (i.e. the length of the optical relay is equal to four times the focal length f of either the first and second lens 708, 710). However, in other embodiments, the focal length of the first lens 708 may be different to the focal length of the second lens 710. In such cases, the optical relay may be form a magnifying (or demagnifying) telescope.

Unlike the optical system 600, the optical system 700 further comprises an optical component 750 between the second lens 710 and a waveguide 711. The optical component 750 in this example is a (third) lens. In this example, the third lens 750 is a Fourier lens. A front focal plane 754 of the third lens 750 is upstream of the third lens 750 and is substantially co-planar with the back focal plane 718 of the second lens 710. A back focal plane 757 of the third lens 750 positioned between first and second surfaces 722,724 of the waveguide 711.

In this example, the focal length f of the third lens 750 is the same as the focal length f of the first and second lenses 708, 710. As such, the optical relay 706 and the third lens 750 collectively define a 6f system (in which the separation between the front focal plane 712 of the first lens 708 and the back focal plane 757 of the third lens 750 is equal to six times the focal length of the first / second or third lens 708, 710, 752). However, in other examples, the focal length of the third lens 750 may be different to the focal length of the first lens 708 and / or second lens 710.

So, an important difference between the optical system 600 and the optical system 700 according to the disclosure is that the optical system 700 according to the disclosure comprises an additional lens 750 between the display device 704 and the waveguide 711.

Another important difference between the optical system 600 and the optical system 700 is that, in the optical system 700, the hologram displayed on the display device 704 is arranged such that a holographic reconstruction 756 of the picture of the hologram is formed downstream of the display device when the display device 704 is illuminated with coherent light from a coherent light source such as a laser. This is holographic reconstruction 756 which is formed without the use of a physical lens between the display device 704 and the holographic reconstruction 756. Instead, the hologram is calculated to form the holographic reconstruction 756 at this location. In particular, the hologram is calculated / arranged such that the holographic reconstruction 756 is formed such that a distance between the holographic reconstruction 756 and the first lens 708 is less than the focal length f of the first lens 708 while the distance between the display device 704 and the first lens 708 is equal to the focal length f of the first lens 708.

The optical relay 706 is arranged to relay the hologram on the display device to form a relayed hologram 760 downstream of the second lens 710 and to form a relayed holographic reconstruction 758 downstream of relayed hologram 760. The relayed hologram 760 corresponds to the display device (comprising the displayed hologram of the picture). The relayed holographic reconstruction 758 corresponds to the holographic reconstruction 756.

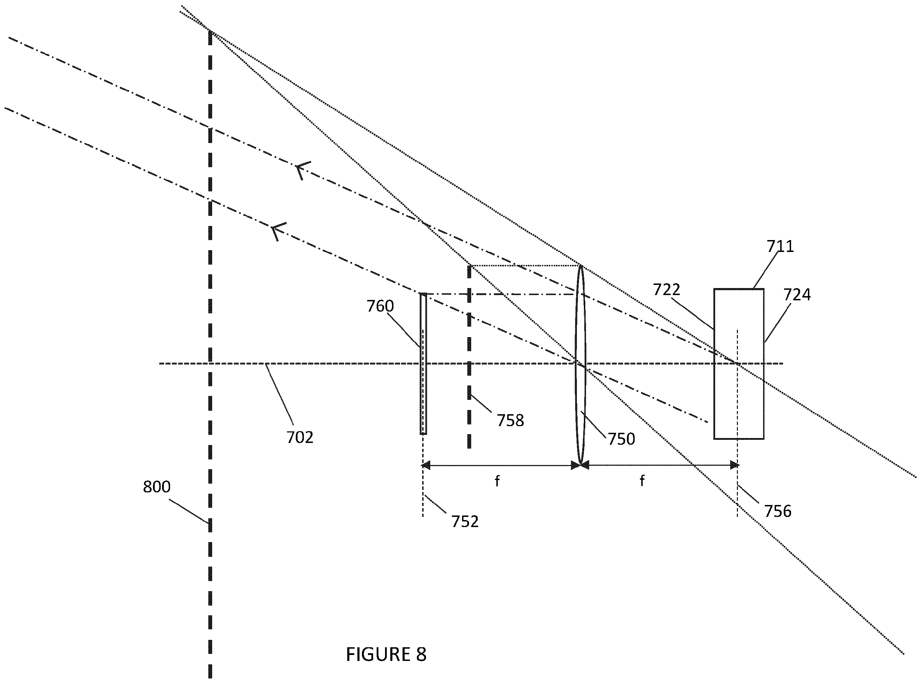

In this example, the relayed holographic reconstruction 758 is formed such that a distance between the relayed holographic reconstruction 758 and the third lens 750 is less than the focal length of the third lens 750 while the distance between the relayed hologram 760 and the third lens 750 is equal to the focal length of the third lens 750. By positioning the relayed hologram 760 and the relayed holographic reconstruction 758 with respect to the third lens 750 in this way, the third lens 750 can form images of the relayed hologram and relayed holographic reconstruction that are far removed from one another. This is explained in more detailed in relation to Figure 8.

Figure 8 shows a cross-sectional schematic view of the third lens 750 and the waveguide 711 of Figure 7 (as well as the relayed hologram 760 and relayed holographic reconstruction 758). These components are shown separately from the other optical components of the optical system 700 (such as the display device 704 and the optical relay 706). Figure 8 is a schematic ray diagrams showing rays from the relayed hologram 760 and the relayed holographic reconstruction 758.

As the skilled person will understand, a (convex) lens (such as the third lens 750) will form a virtual image of an object at infinity when the object to be imaged is positioned at the focal length of the lens. As above, the relayed hologram 760 is formed (by the optical relay 706) at the focal length f of the third lens 750 (in particular, at the front focal plane 752 of the third lens 750). Thus, the third lens 750 is arranged to form a virtual image of the relayed hologram 760 at infinity. The virtual image at infinity is upstream of the display device 704 / third lens 750. The formation of this virtual image is represented by the rays coming from the relayed hologram 760 to the third lens 750 and then extending parallel. Said rays are shown by the broken lines comprising dots and dashes in an alternating configuration in Figure 8.

The skilled person will also understand that a (convex) lens (such as the third lens 750) will form a virtual image of an object at a finite image distance upstream of said lens when the object to be imaged is positioned such that a distance between the object and the lens is less than the focal length of the lens. As above, the relayed holographic reconstruction 758 is formed (by the optical relay 706) such that the distance between the relayed holographic reconstruction 758 and the third lens 750 is less than the focal length of the third lens 750. In other words, the relayed holographic reconstruction 758 is positioned between the front focal plane 752 of the third lens 750 and the third lens 750 itself. By forming the relayed holographic reconstruction 758 here, the third lens 750 is arranged to form a virtual image 800 of the relayed holographic reconstruction 758 upstream of the third lens 750 and at a finite image distance. The formation of this virtual image 800 is represented by the rays coming from the relayed holographic reconstruction 758 to the third lens 750 and then converging upstream of the third lens 750. Said rays are shown by solid lines in Figure 8.

Both the virtual image of the relayed hologram 760 and the virtual image 800 of the relayed holographic reconstruction 758 are upstream of the third lens 750. However, the virtual image distance of the virtual image of the relayed hologram 760 is at infinity whereas the virtual image distance of the virtual image 800 of the relayed holographic reconstruction 758 is finite. Thus, the two virtual images are far removed from one another (in fact, the separation between the two virtual images is effectively infinite). The artifacts (described above) may be features in the virtual image of the relayed hologram 760. The appearance of the artifacts may not be present / apparent in the virtual image 800 of the relayed holographic reconstruction 758. The inventors have found that, by separating the two virtual images as described, the prominence of the artifacts in a viewing system's field of view may be substantially reduced or even eliminated. Without wishing to be bound by theory, it is believed that this is because the virtual image of the relayed hologram 760 (comprising the artifacts) is far removed from the virtual image of the relayed holographic reconstruction 758 and, in this case, projected right out to infinity, beyond the virtual image of the relayed holographic reconstruction 758. Thus, the viewing system is not required to "look through" the virtual image of the relayed hologram 760 to view the virtual image of the relayed holographic reconstruction 758.

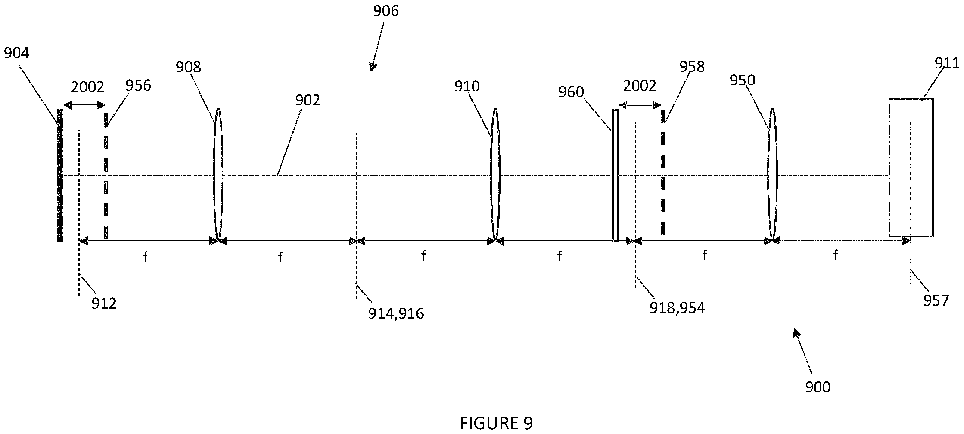

Figure 9 is a cross-sectional schematic view of the optical components of a second optical system 900 that is arranged such that an image of the hologram / display device is far removed from the virtual image of the holographic reconstruction, thus reducing or eliminating the appearance of the above-described artifacts. The second optical system 900 is similar to the first optical system 700 in that the second optical system 900 is arranged such that a relayed hologram and relayed holographic reconstruction are formed at positions with respect to a third lens so that images of the two are far removed from one another. However, in the second optical system 900, the image of the relayed hologram is a real image formed downstream of the waveguide (for example, behind a viewing system) rather than at infinity and upstream of the third lens. This is described in more detail below.

Like the first optical system 700, the second optical system 900 is arranged such that a Fourier transform of the hologram displayed on the display device 904 is coupled into the waveguide 911 (rather the hologram per se).

The optical system 900 comprises an optical axis represented by dotted line 902 in Figure 9. The optical system 900 comprises a display device 904 which, in this example, is a liquid crystal on silicon spatial light modulator. The display device 904 is arranged to display a hologram of a picture. Downstream of the display device 904 is an optical relay 906. The optical relay 906 comprises a first lens 908 and a second lens 910. The optical system 900 further comprises a third lens 950.

The display device 904, the optical relay 906 and the third lens 950 of the optical system 900 are very similar to the display device 704, optical relay 706 and third lens of the first optical system 700. For example, the first lens 908 of the optical relay 906 comprises a front focal plane 912 and a back focal plane 914. The front focal plane 912 is upstream of the first lens 908 and the back focal plane 914 is downstream of the first lens 908. The second lens 910 of the optical relay 906 comprises a front focal plane 916 and a back focal plane 918. The front focal plane 916 is upstream of the second lens 910 and the back focal plane 918 is downstream of the second lens 910. Normals of the front and back focal planes of each of the first and second lenses 908, 910 are parallel to the optical axis 902 and a distance from each of the front and back focal planes to the respective first or second lens is equal to the focal length f of the respective lens. In this example, the front focal plane 916 of the second lens 910 is substantially coplanar with the back focal plane 914 of the first lens 908. In the example shown in Figure 9, the focal length f of the first and second lenses 908, 910 is the same. As such, the optical relay forms a 4f system (i.e. the length of the optical relay is equal to four times the focal length f of either the first and second lens 908, 910). However, in other embodiments, the focal length of the first lens 908 may be different to the focal length of the second lens 910. In such cases, the optical relay may form a magnifying (or demagnifying) telescope. As in the first optical system 700, the third lens 950 is a Fourier lens. A front focal plane 954 of the third lens 950 is upstream of the third lens and is substantially co-planar with the back focal plane 918 of the second lens 910. A back focal plane 957 of the third lens 950 positioned between first and second surfaces of the waveguide 911. In this example, the focal length f of the third lens 950 is the same as the focal length of the first and second lenses 908, 910. As such, the optical relay 906 and the third lens 950 collectively define a 6f system (in which the separation between the front focal plane 912 of the first lens 908 and the back focal plane 957 of the third lens 950 is equal to six times the focal length of the first / second or third lens 908, 910, 952). However, in other examples, the focal length of the third lens 950 may be different to the focal length of the first lens 908 and / or second lens 910.

The key difference between the first optical system 700 and the second optical system 900 is that, in the second optical system 900, the display device 904 is not positioned substantially at the front focal plane 912 of the first lens 908 (as is the case in the first optical system 700). Instead, the distance between the display device 904 and the first lens 908 is greater than the focal length f of the first lens 908. However, like in the first optical system 700, in the second optical system 900, the hologram displayed on the display device 904 is arranged such that a holographic reconstruction 956 of a picture of the hologram is formed downstream of the display device such that a distance between the holographic reconstruction 956 and the first lens 908 is less than the focal length f of the first lens 908. As such, a distance between the display device 904 and the holographic reconstruction 956 in the second optical system 900 is greater than a distance between the display device 704 and the holographic reconstruction 756 in the second optical system 700.

The optical relay 906 is arranged to relay the hologram on the display device to form a relayed hologram 960 downstream of the second lens 910 and to form a relayed holographic reconstruction 958 downstream of relayed hologram 960. The relayed hologram 960 corresponds to the display device (comprising the displayed hologram of the picture). The relayed holographic reconstruction 958 corresponds to the holographic reconstruction 956.

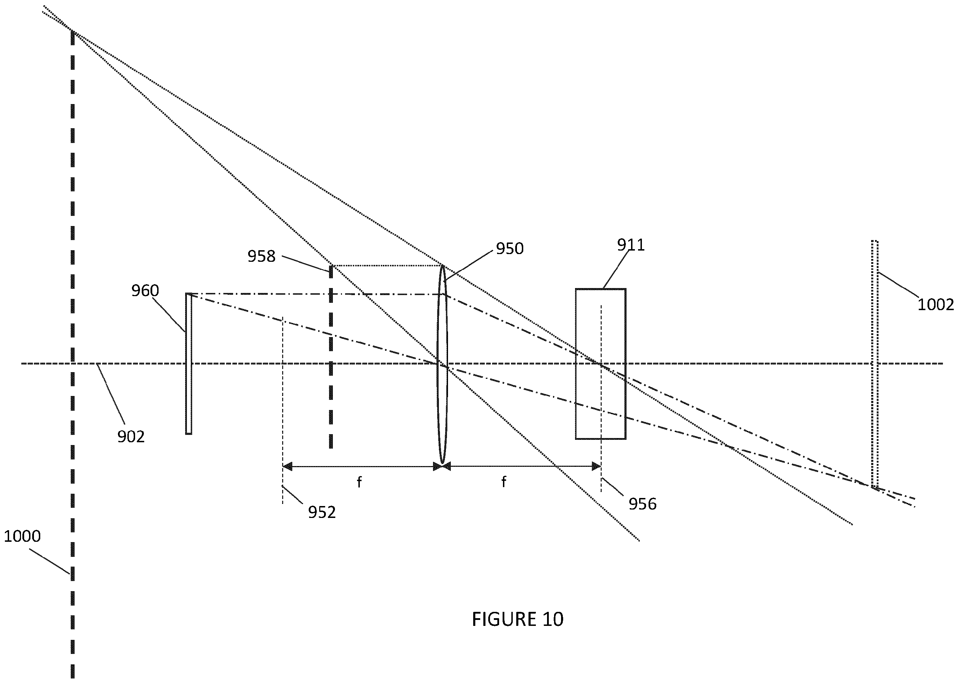

In this example, the relayed holographic reconstruction 958 is formed such that a distance between the relayed holographic reconstruction 958 and the third lens 950 is less than the focal length of the third lens 950 while the distance between the relayed hologram 960 and the third lens 950 is greater than the focal length of the third lens 950. By positioning the relayed hologram 960 and the relayed holographic reconstruction 986 with respect to the third lens 950 in this way, the third lens 950 can form images of the relayed hologram and relayed holographic reconstruction that are far removed from one another. This is explained in more detailed in relation to Figure 10.

Figure 10 shows a cross-sectional schematic view of the third lens 950 and the waveguide 911 of Figure 9 (as well as the relayed hologram 960 and relayed holographic reconstruction 958). These components are shown separately from the other optical components of the optical system 900 (such as the display device 904 and the optical relay 906). Figure 10 is a schematic ray diagrams showing rays from the relayed hologram 960 and the relayed holographic reconstruction 958.

As the skilled person will understand, a (convex) lens (such as the third lens 950) will form a real image of an object when the object to be imaged is positioned beyond the focal length of the lens. Said real image will be formed at a finite image distance downstream of said lens. As above, the relayed hologram 960 is formed (by the optical relay 906) beyond the focal length f of the third lens 950. In particular, the distance between the relayed hologram 960 and the third lens 950 is greater than the focal length f of the third lens. Thus, the third lens 950 is arranged to form a real image 1002 of the relayed hologram 960 downstream of the third lens 950. The formation of this real image 1002 is represented by the rays coming from the relayed hologram 960 to the third lens 950 and then converging at a point which is downstream of the third lens 950 (and waveguide 911). Said rays are shown by the broken lines comprising dots and dashes in an alternating configuration in Figure 10.

In both the first and second optical systems 700,900, the relayed holographic reconstruction is formed (by the optical relay) such that the distance between the relayed holographic reconstruction and the third lens is less than the focal plane of the third lens. Thus, like in the first optical system 700, in the second optical system 900, the third lens 950 is arranged to form a virtual image 1000 of the relayed holographic reconstruction 958 upstream of the third lens 950 and at a finite image distance. The formation of this virtual image 1000 is represented by the rays coming from the relayed holographic reconstruction 958 to the third lens 950 and then converging at a point which is upstream of the third lens 950. Said rays are shown by the solid lines in Figure 10.

So, the third lens 950 (and optical system 900 more generally) is arranged to form a virtual image 1000 of the relayed holographic reconstruction 958 upstream of the third lens and a real image 1002 of the relayed hologram 960 downstream of the waveguide 911. In this way, the two images (virtual and real) are far removed from one another.

In examples, the real image 1002 of the relayed hologram 960 is downstream of a viewing window / eyebox (which is not shown in the Figures but which would be located between the waveguide 911 and the real image of the relayed hologram 960). Thus, because, as above, it is believed that the artifacts are visible / apparent in the image 1002 of relayed hologram 960 and not the relayed holographic reconstruction 958, the prominence of the artifacts in a viewing system's field of view may be substantially reduced or even eliminated. In particular, the image 1000 of the relayed holographic reconstruction 958 is in front of the viewing system and the image 1002 of the relayed hologram 960 is behind the viewing system such that the viewing system is not required to "look through" an image of the relayed hologram (comprising the artifacts) when viewing the virtual image of the holographic reconstruction 958.

The first and second optical systems 700,900 (according to the disclosure) described above each comprise an optical relay 702,902. The optical relay in each example forms a relayed hologram 760,960 and a relayed holographic reconstruction 758,958 of a picture of the hologram. The third lens 750,950 in each example then forms images of the relayed hologram and relayed holographic reconstruction. Some examples according to the disclosure do not comprise the optical relay. These examples comprise a (single) lens which forms images of the hologram / display device per se and the holographic reconstruction per se, rather than relayed versions of the hologram and holographic reconstruction. However, the principal is substantially the same as previously described in that the hologram / display device and holographic reconstruction are positioned with respect to the (single) lens so that the image of the hologram / display device is far removed from the image of the holographic reconstruction such that the appearance / impact of the above-described artifacts is reduced / eliminated.

### Virtual replicas of the display device formed by the waveguide or waveguides

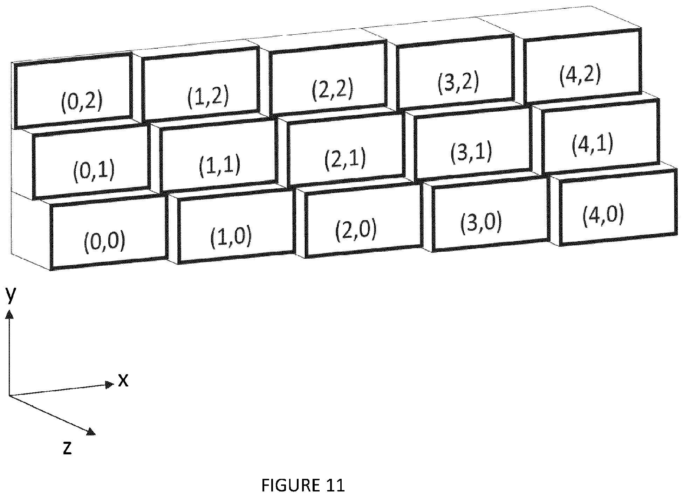

As described above, in relation to Figure 6, the waveguide 611 of the optical system 600 replicates the light received from the display device so as to form a plurality of replicas or copies of the hologram displayed on display device 604 such that each replica comprises light spatially modulated in accordance with the hologram on the display device. The optical system further comprises a second waveguide (not shown in the drawings) to provide waveguiding and replication in a second direction such that a two-dimensional array of replicas is output by the second waveguide. Figure 11 is a perspective view relating to a portion of this two-dimensional array of replicas..

As noted above with reference to Figure 4, a one-dimensional waveguide 408 may be arranged to expand the exit pupil of a display system. The display system comprises a display device 402 displaying a hologram, which is output at "bounce" point B0 of waveguide 408. In addition, the waveguide forms a plurality of replicas of the hologram, at respective "bounce" points B1 to B8 along its length, corresponding to the direction of pupil expansion. As shown in Figure 4, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Figure 11 shows an example visualisation of an "extended modulator" or "virtual surface" comprising a 3D array including a hologram formed on a display device and a (corresponding) plurality of replicas of the hologram formed by a waveguide. Figure 11 shows an extended modulator array formed by the optical system 600 of Figure 6. Position (0,0) of the array may correspond to the display device. Each of the subsequent components of the array (to position (4,2)) are replicas of the display device. Due to the optical path distance through the one or more waveguides, the depths of the virtual replicas (measured from the eye-box) are different. This results in the "staggering" of the replicas in z direction, as shown in Figure 11. For the avoidance of doubt, these different virtual replicas of the display device contribute to the same reconstructed virtual image which therefore appears at the same depth to the viewer from all positions within the eye-box.

When the extended modulator or virtual surface is formed by the optical system 600 of Figure 6, each replica is a replica of the display device 604 and so has a shape corresponding to the shape of the display device 604. In this example, the display device 604 has a rectangular shape and so each of the replicas of the extended modulator or virtual surface have corresponding a rectangular shape.

As the skilled person will appreciate, a rectangular shape is suitable for providing a high packing density when the rectangular shape is replicated (as high as 100% filled, when the packing is optimized). So, as the display device 604 / each replica of the display device has a rectangular shape, it should be clear that the extended modulator can be arranged such that there is a high packing density. In particular, as the skilled person will appreciate, if the extended modulator is viewed head-on, in a viewing plane parallel to the x-y plane in Figure 11, the staggering will not apparent. In this view, and as a result of the high packing density, substantially no gaps may be apparent between adjacent replicas of the extended modulator. Thus, in said viewing plane, the extended modulator may appear as a continuous surface. In particular, there may be substantially no dark bands between replicas making up the extended modulator. The inventors have found that this is no longer the case in the optical systems 700 and 900 of Figures 7 and 9 respectively (when a conventionally calculated hologram is displayed on a display device 704,904 of those optical systems 700, 900) and dark areas may be present on the virtual surface.

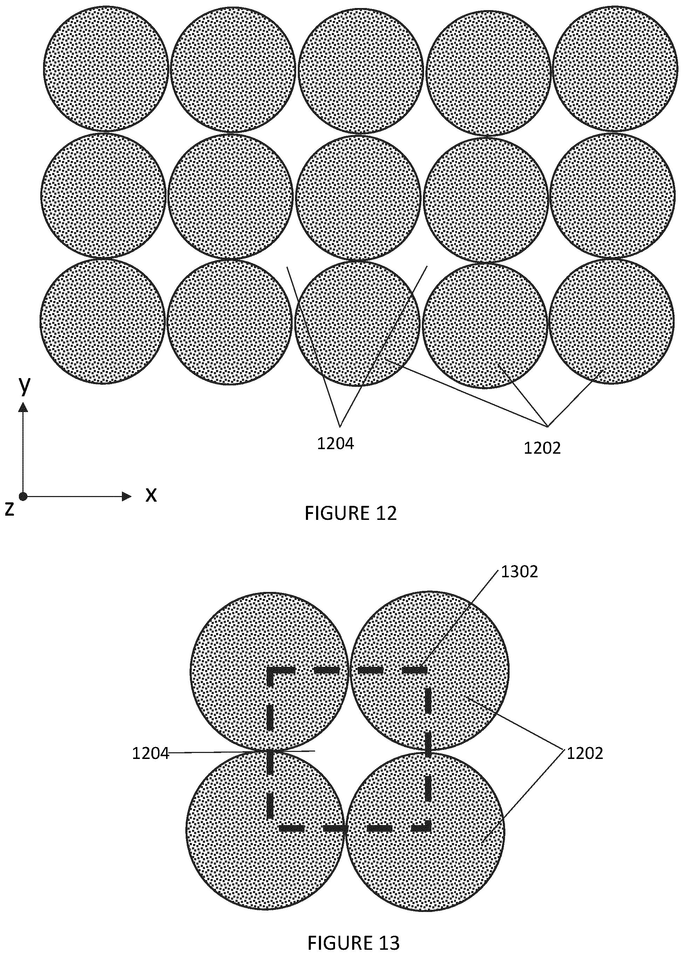

After thorough simulation and experimentation, the inventors have found that the cause of the dark bands is the fact that, in the optical systems 700, 900, a Fourier transform of the (relayed) hologram displayed on the respective display device 704,904 is coupled into the waveguide and replicated rather than the hologram per se. The inventors have also found that the shape of the Fourier transform of the (relayed) hologram is dependent on how the hologram was calculated, rather than the shape of the display device. For example, the inventors have found that, when a point cloud-type calculation method is used to determine the displayed hologram, the shape of the Fourier transform of the hologram is dependent on / corresponds to the shape of the wavelet traced back to the display device from image points of a target image in a ray-tracing calculation. In particular, in point cloud-type calculations, a wavelet is traced back from each point of a target image to the display device to define a sub-area of the display device. A sub-hologram is typically calculated for each sub-area of the display device. When the sub-hologram is suitably illuminated, that sub-hologram is arranged to form a particular image point. As the display device is pixellated, each sub-area is associated with a contiguous group of pixels of the display device. Conventionally, the wavelet used in point cloud-type holography calculations takes the form of a light cone which forms a circular footprint on the display device for each image point. Thus, each sub-hologram / sub-area on the display device / contiguous group of pixels conventionally has a circular shape. The inventors have surprisingly found that the Fourier transform of the (relayed) hologram coupled into the waveguide and replicated has a corresponding circular shape such that the extended modulator comprises an array of circular replicas. As explained in relation to Figures 12 and 13, such an extended modulator has a relatively much lower packing density than an extended modulator formed of rectangular replicas. The inventors have recognised that the empty space between the replicas creates dark areas between replicas of the extended modulator.

Figure 12 shows a schematic view of an extended modulator formed by the optical system 700 or 900 (of Figure 7 or 9) when a conventionally calculated hologram is displayed on a display device. Figure 12 is a view of the extended modulator from viewing plane described above (which is in a plane parallel to the x-y plane). In other words, Figure 12 is a "head-on" schematic view of the extended modulator. As shown in Figure 12, the inventors have found that the replicas 1202 formed by optical systems 700,900 (when a conventionally calculated hologram is displayed on the respective display device) have a circular shape. That is, a perimeter of each of the replicas has a circular shape. A circular shape has a (much) lower optimised packing density than, for example, a square or rectangular shape. For example, while a square shape may achieve up to a 100% (filled) packing density, the packing density will inevitably be much lower when circles are packed. It can be mathematically shown that the optimized packing density of equally sized circles in a square lattice (as is the case in Figure 12) is 78.54% (filled). The remaining space is empty. When each replica 1202 of an extended modulator has a circular shape, this empty space forms dark areas 1204 in the extended modulator between adjacent replicas 1202. Figure 13 shows view replicas 1202 of the extended modulator of Figure 12 to more clearly show the empty space / dark area 1204. Figure 13 includes a square 1302, the corners of which are aligned with the centre of each (circular) replica 1202. The square 1302 represents the fact that the extended modulator comprises a square coordination geometry / the replicas 1202 are part of a square lattice. The square 1302 is 78.54% filled by the replicas 1202. The remaining space at the centre of the square 1302 is empty and forms a dark area 1204. The dark areas 1204 in extended modulator of Figure 12 adversely affects the viewing experience of a user of the optical systems 700, 900 relative to the viewing experience of a user of the optical system 600 (without dark areas).

The inventors have recognised that the shape of the wavelet can be modified to modify the shape of the Fourier transform of the hologram (and so, because it is this Fourier transform of the hologram that is replicated, modify the shape of the replicas forming the extended modulator). More specifically, the inventors have recognised that a wavelet shape can be selected that is a shape that is suitable for providing relatively higher packing densities than circles to reduce, minimise or eliminate the empty space between replicas in the extended modulator (relative to the extended modulator of Figure 12 and 13) and so reduce, minimise or eliminate dark areas in the extended modulator. This improves the viewing experience of a user of the optical systems 700,900.

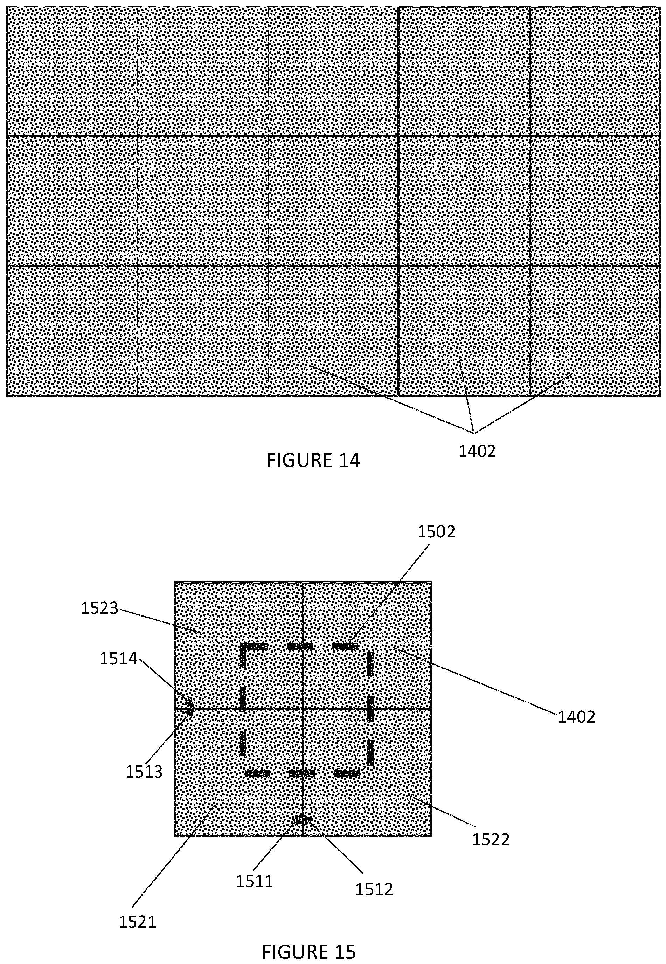

Figure 14 shows a schematic view of an extended modulator formed by the optical system 700 or 900 (of Figure 7 or 9) when a hologram is displayed on the respective display device 704,904 that is a point cloud-type hologram that has been calculated using square wavelets. Figure 14 is a corresponding "head-on" view of the extended modulator as shown in Figure 12. Because the hologram in Figure 14 has been calculated using square wavelets, each sub-area and sub-hologram on the display device has a square shape. Thus, the Fourier transform of the hologram also has a square shape and the extended modulator (formed of replicas of the Fourier transform of the hologram) comprises an array of square replicas. Figure 15 shows four replicas 1402 of the extended modulator of Figure 14. Figure 15 includes a square 1502, the corners of which are aligned with the centre of each (square) replica 1402. The square 1502 represents the fact that the extended modulator comprises a square coordination geometry / the replicas 1402 are part of a square lattice. The square 1502 is substantially filled by the replicas 1402. There is substantially no empty space between the replicas 1403. This is because the optimal packing density of a square in a square lattice is 100% (filled). Thus, dark areas in the extended modulator of Figure 14 are substantially eliminated.

In reality, the replicas of an extended modulator may have a slightly different size and shape to each other when viewed from said viewing plane. This may arise because, as above, each replica has a slightly different optical path through the optical system. These differences in optical path length can result in subtle changes in the magnification (i.e. size) of the replica. Furthermore, any (small) optical misalignments in an optical system may result in the replica being slightly skewed. For example, a skew may cause a Fourier transform of a hologram having a circular shape to appear slightly non-circular in the viewing plane. So, this skew may change the appearance of replicas in the viewing plane and may result in differences between adjacent replicas of the viewing plane. These differences in size and shape are not shown in the schematic drawings of the extended modulator. The skilled reader should appreciate that these differences in size and shape do not change the principal that the selection of, for example, a square wavelet in the hologram calculation (rather than a circular wavelet) increases a possible (optimized) packing density of the replicas.

It should be understood that a hologram having a square shape when a Fourier transform is applied is not the only shape that is suitable for providing high packing densities in the extended modulator. For example, a rectangular shape similarly allows for high packing densities. Furthermore, many other regular and irregular shapes may also allow for high packing densities. More generally, a shape may be suitable for providing high packing densities when it comprises a first side and an opposing second side wherein the first side of a first replica of the shape is suitable for cooperating with a respective second side of a second replica of the shape. In 2D arrays of replicas (as in the extended modulator of Figure 14), the shape may also comprise a third side and an opposing fourth side, wherein the third side of a first replica of the shape is suitable for cooperating with the respective fourth side of a third replica. The second replica may be a replica of the shape in a first replication direction and the third replica may be a replica of the shape in a second replication direction that is orthogonal to the first replication direction.

Each square shaped replica 1402 of Figure 15 comprises a first side 1511, a second side 1512, a third side 1513 and a fourth side 1514. The first side 1511 opposes the second side 1512. The third side 1513 opposes the fourth side 1514. Each of the first to fourth sides 1511 to 1514 has the form a straight line and each straight line is equal in length. The first and second sides 1511, 1512 are parallel to one another. The third and fourth sides 1513, 1514 are parallel to one another and perpendicular to the first and second sides 1511, 1512. Because of the nature of the four sides of the replica, each side is able to exactly abut (i.e. cooperate with) another side of adjacent replicas. In more detail, first, second and third replicas (1521 to 1523 respectively) are labelled in Figure 15. With respect to the first replica 1521, the second replica 1522 is in a first replication direction and the third replica 1523 is in a second replication direction (that is perpendicular to the first replication direction). A first side of the first replica 1521 cooperates with / abuts a second side of the second replica 1522. A third side of the first replica 1521 cooperates with a fourth side of the third replica 1523. The skilled person will appreciate that this cooperation allows for monohedral tessellation of the replicas to create a virtual modulator that has the appearance of continuous surface (with substantially no dark bands) when viewed in the viewing plane.

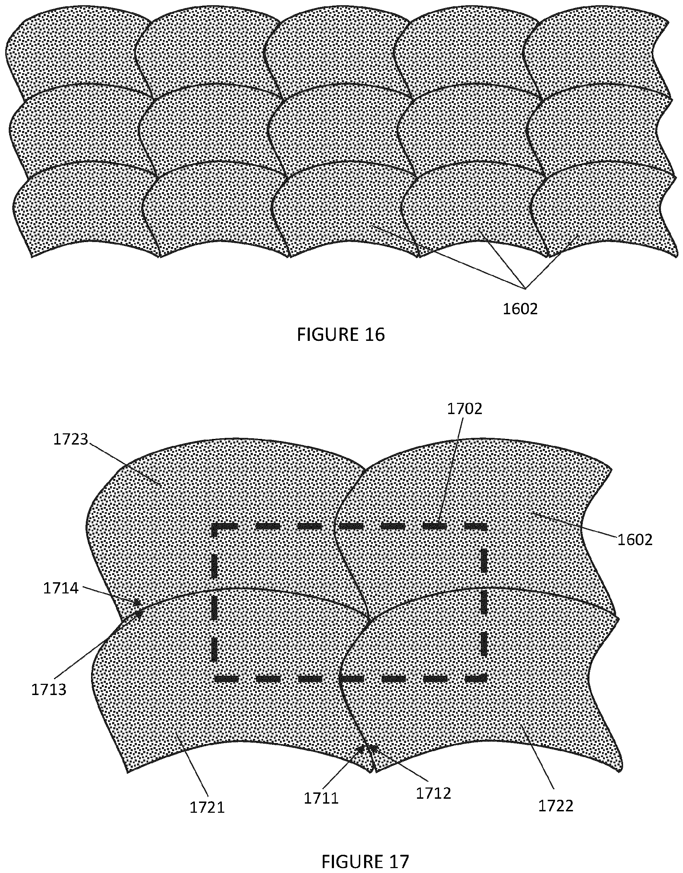

Figure 16 shows a schematic view of an extended modulator formed by the optical system 700 or 900 (of Figure 7 or 9) when a hologram is displayed on the respective display device 704,904 that is a point-cloud hologram that has been calculated using irregularly shaped wavelets. Figure 16 is a corresponding "head-on" view of the extended modulator as shown in Figures 12 and 14. Because the hologram in Figure 16 has been calculated using irregularly shaped wavelets, each sub-area and sub-hologram on the display device has a corresponding irregular shape. Thus, the Fourier transform of the hologram also has the irregular shape and the extended modulator (formed of replicas of the Fourier transform of the hologram) comprises an array of irregularly shaped replicas.

Figure 17 shows four replicas 1602 of the extended modulator of Figure 16. Figure 17 includes a rectangle 1702, the corners of which are aligned with the centre of each (irregularly shaped) replica 1602. The rectangle 1702 represents the fact that the extended modulator comprises a rectangular coordination geometry (rather than a square coordination geometry as in the previous examples). The rectangle 1702 is substantially filled by the replicas 1602. There is substantially no empty space between the replicas 1602. This is because irregular shape of Figure 16 and 17 has an optimal packing density of 100% (filled) in rectangular coordination geometry / rectangular lattice. Thus, dark areas in the extended modulator of Figure 16 are substantially eliminated.

In more detail, each irregularly shaped replica 1602 of Figure 17 comprises a first side 1711, a second side 1712, a third side 1713 and a fourth side 1714. The first side 1711 opposes the second side 1712. The third side 1713 opposes the fourth side 1714. Each of the first to fourth sides 1711 to 1714 has an irregular curved shape. However, the curved shape of the first side 1711 corresponds (or is complementary) to the curved shape of the second side 1712 and the curved shape of the third side 1713 corresponds (or is complementary) to the curved shape of the fourth side 1714. Thus, a first side of the first replica 1721 fits with (or abuts or is contiguous with) a respective second side of the second replica 1722. A third side of the first replica 1721 fits with (or abuts or is contiguous with) a fourth side of the third replica 1723. The skilled person will appreciate that this cooperation allows for monohedral tessellation of the replicas to create a virtual modulator that has the appearance of continuous surface (with substantially no dark bands) when viewed in the viewing plane.

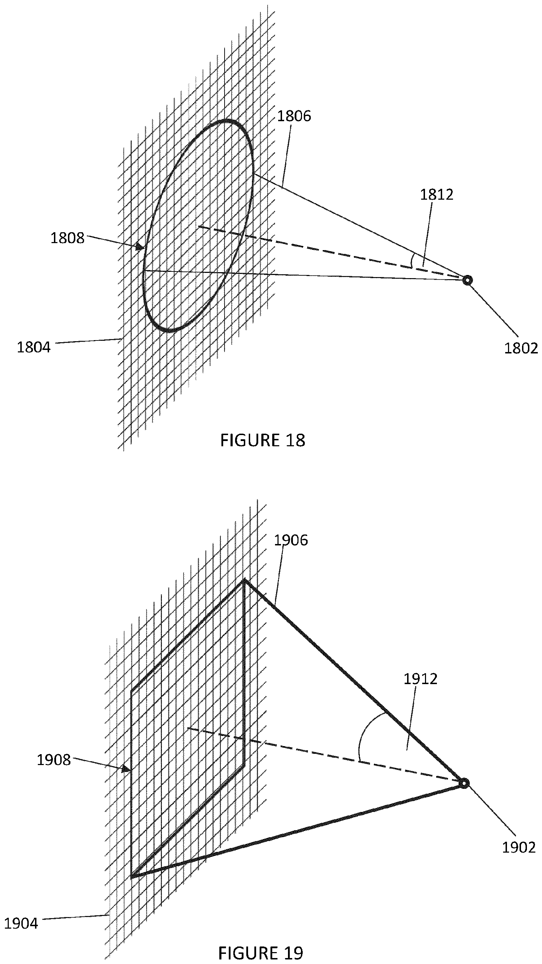

Figures 18 and 19 schematically show the relationship between an image point 1802,1902 and a sub-area of a portion 1804,1904 of a pixellated display device during a point cloud-type calculation of a hologram. In each of Figures 18 and 19, a wavelet 1806,1906 is computationally traced back from the image point to the display device, for example using ray-tracing. A footprint 1808, 1908 of the wavelet 1806, 1906 on the display device is determined. A sub-hologram is calculated / determined within the footprint 1808,1908 in a conventional way, the sub-hologram being suitable for forming the image point 1802,1902 when suitably illuminated by a coherent light source.

Figure 18 represents a conventional point cloud-type calculation in which circular wavelets 1806 are used. More specifically, a light cone is propagated from the image point 1802 towards the display device computationally by ray tracing. In this example, as is convention, the range of angles (represented by 1812 in Figure 18) of the simulated / computationally modelled light cone 1810 is substantially equal to the maximum diffraction angle of the display device / optical system. Because the ray tracing is using a cone of light as the wavelet 1806, the wavelet 1806 may be described as circular and the footprint 1808 of the light cone on the display device is circular. As described above, the inventors have found that this conventional, circular, wavelet / footprint / sub-hologram shape is non-optimal for optical systems in which a Fourier transform of the hologram is replicated (rather than the hologram per se) because of the low packing density of circles.

Figure 19 represents a point cloud-type calculation in accordance with the disclosure in which square wavelets 1906 are used. More specifically, light rays are propagated from the image point 1902 towards the display device computationally by ray tracing. Because the ray tracing is using a square (rather than circular) wavelet 1906, the footprint 1908 of the wavelet 1906 on the display device is square. As described above, a square has a high packing efficiency and so the use of square wavelets reduces or minimises the presence of dark areas in an extended modulator formed of square-shaped replicas (of a Fourier transform of the hologram).

It should be clear to the skilled reader that Figure 19 showing a square wavelet 1906 and a square footprint 1908 is merely one example of a shape that has a high packing density and that a corresponding ray-tracing method could be used for any other shape according to the disclosure. For example, to form the irregular shaped replicas shown in Figure 16 and 17, a wavelet and footprint on the display device having that irregular shape would be used in the hologram calculation.

Furthermore, Figures 18 and 19 have been described in the context of calculating a hologram, in which a wavelet is computationally traced back from the image point to the display device in a point-cloud type hologram calculation in order to determine a sub-hologram for that image point. However, it should be understood that corresponding or identical figures would also represent the formation of the respective image point 1802, 1902 when the display device is suitably illuminated with coherent light. In such cases, the incident light on the display device is spatially modulated in accordance with the sub-hologram. This spatially modulated light is encoded in such a way as to form the image point, which is an image point in a holographic reconstruction. It should be clear to the skilled reader, that the hologram typically comprises a superposition of a plurality (e.g. hundreds or thousands or more) of sub-holograms, each sub-hologram being arranged to form a different image point of the holographic reconstruction. When such a hologram is suitably illuminated with coherent light, a holographic reconstruction comprising a plurality (e.g. hundreds or thousands or more) of image point. Such a holographic reconstruction may be referred to as a point cloud image.

### Short image Distance

In the optical systems 700, 900 a holographic reconstruction 756, 956 is formed downstream of a display device 704, 904. In particular the holographic reconstruction 756, 956 is formed downstream of the respective display device 704, 904 and within the focal length of the first lens 708, 908 such that the relayed holographic reconstruction 756, 956 is also within the focal length of the third lens 750,950. In this way, a virtual image of the relayed holographic reconstruction 758,958 is formed. Meanwhile, the display device 704, 904 is either positioned at the focal length of the first lens 708 (in the first optical system 700) or slightly further from the first lens 908 than the focal length (in the second optical system 900). In conventional holography, a holographic reconstruction formed downstream of the display device 704, 904 is typically formed relatively far from the display device (for example, the distance between the display device and the holographic reconstruction may be several metres). So, if the hologram is calculated in a conventional way, the optical system would need to have a very long optical axis and / or lens(es) with very long focal lengths to achieve the above arrangement (in which the holographic reconstruction is formed within the focal length of a lens while the display device is at or beyond the focal length of said lens).

The inventors have recognised that a compact optical system can be provided if the distance between the display device 704,904 and the holographic reconstruction 756,956 formed downstream of the respective display device is relatively short. These distances are represented by reference number 2000 in the first optical system 700 and by reference number 2002 in the second optical system 900. The first distance 2000 of the first optical system 700 is slightly shorter than the second distance 2002 of the second optical system 900 (assuming all other components of the optical systems 700,900 are the same, in particular that the first to third lenses are arranged in the same way). The distance between the relayed display device 760, 960 and the respective relayed holographic reconstruction 758, 958 is substantially the same as the corresponding distance between the holographic reconstruction 756, 956 and the display device 704, 904. Figures 7 and 9 are not drawn to scale.

The inventors have surprisingly found that the distance 2000 or 2002 can be made to be 20 millimetres of less (for example) by using relatively very small contiguous groups of pixels to form each image point of a holographic reconstruction. Turning to Figures 18 and 19, it should be clear to the skilled reader that, by reducing size (i.e. area / number of pixels) of each footprint 1808, 1908, the image point 1802,1902 can be formed closer to the display device (when the same range of angle of light rays are used, which, as above, may be limited by the diffraction angle of the display device). The result of this is that a relatively very small number of pixels is used for each sub-hologram. For example, a contiguous group of pixels comprising less than 100,000 pixels, optionally less than 25,000 pixels, optionally less than 5,000 pixels, optionally less than 1,000 pixels, optionally less than 500 pixels, optionally less than 200 pixels, optionally less than 100 pixels may form each sub-hologram / contiguous group of pixels. As discussed above, the inventors were surprised that such small groups of pixels are suitable for accurately forming each image point of a holographic reconstruction.

It should be clear that the approach of using a relatively small number of pixels / relatively small area on a display device to form an image point is suitable for forming a holographic reconstruction relatively very close to the display device regardless of the optical system that the device is used with. However, this approach has particular advantage in the context of the type of optical systems shown in Figures 7 and 9 (because of the need to form a holographic reconstruction within the focal length of a lens while the display device is at or just beyond the focal length of the lens).

Furthermore, the approach of using a relatively small number of pixels / relatively small area on a display device to form an image point can be used with more conventional point cloud-type holograms (e.g. having circular wavelets) or when images are formed with non-circular wavelets having a shape that has a relatively very high packing density (as disclosed above). Because the type of optical systems shown in Figures 7 and 9 replicate a Fourier transform of the hologram, rather than the hologram per se (such that the shape of the Fourier transform of the hologram is important) it may be particularly advantageous for such systems to use the non-circular wavelets described above which also have the relatively very short image distance / relatively small pixel number per image point.

### Example Holograms

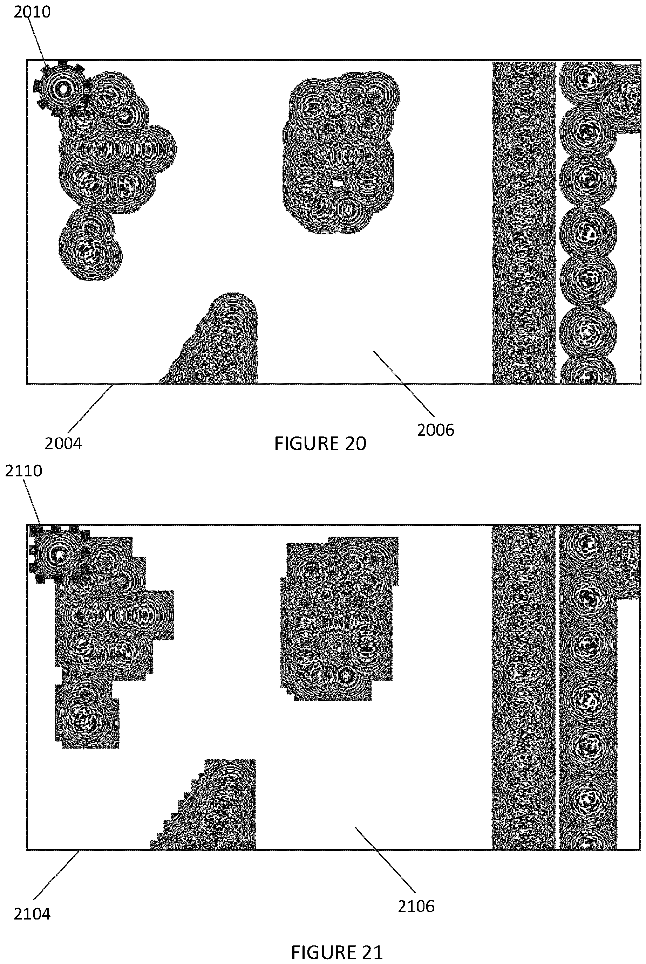

Figures 20 and 21 show example portions of a phase hologram 2004, 2104. Figures 20 and 21 are both phase plots, representing the phase delay applied to incident light. Greater amounts of phase delay are represented by darker regions of the plot. In both figures, the hologram is of the same picture and a corresponding portion of the hologram is shown in both figures. The difference between the two figures is that Figure 20 shows a portion of a hologram 2004 that has been calculated using a conventional point cloud-type method using circular wavelets for each image point whereas Figure 21 shows a portion of a hologram 2104 that has been calculated using a point cloud-type method using square wavelets for each image point (in accordance with the present disclosure). A circular wavelet 2010 is identified in Figure 20 by the dashed / broken circular line. A corresponding square wavelet 2110 identified in Figure 21 by the dashed / broken square. The circular wavelet 2010 and square wavelet 2110 each encode the same image point of a target image. The difference in shape arises because of the wavelet shape selection (circular or square).

Both holograms have been calculated such that a holographic reconstruction of the hologram is formed 10 millimetres away from the hologram. Thus, as above, the number of pixels of the display device used to form each wavelet is relatively very low (for example, about 25,000 in this case). The hologram is arranged such that content is contained in limited areas of the replay field and there are large areas of the replay field without content. This explains why there are large areas of empty space 2006, 2106 (in which no phase delay is applied to light) on each hologram. If larger wavelets were used (for example, wavelets that substantially fill the display device as is more conventional), then these empty spaces 2006, 2106 would not be apparent.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A driver for a display device (704) comprising a plurality of pixels; the driver being arranged to drive the display device (704) to display a hologram of a picture on the plurality of pixels such that, when the display device (704) is suitably illuminated, a holographic reconstruction (756) of the picture is formed;
wherein the holographic reconstruction (756) comprises a plurality of image points and the hologram is arranged such that each image point of the holographic reconstruction (756) is formed using a contiguous group of pixels of the display device (704);
wherein each contiguous group of pixels has a first shape comprising a first side and a second side, wherein the first and second sides are arranged such that, if the first shape is replicated, a respective first side (1511) of a first replica (1521) of the first shape is suitable for cooperating with a respective second side (1512) of a second replica (1522) of the first shape.

2. A driver as claimed in claim 1, wherein a Fourier transform of the hologram has a second shape corresponding to the first shape.

3. A driver as claimed in claim 2, wherein the second shape is such that, if a Fourier transform of the hologram is replicated by a hologram replicator, a respective first side of a first replica of the Fourier transform of the hologram is suitable for co-operating with the respective second side of a second replica of the transform of the hologram.

4. A driver as claimed in any one of the preceding claims, wherein the first shape is a shape that is suitable for providing a packing density of 90% or greater, optionally 95% or greater.

5. A driver as claimed in any one of the preceding claims, wherein the first shape is one or more of:
a shape that is substantially non-circular;
a shape that is suitable for monohedral tessellation, and
a shape that is suitable for forming a continuous surface when the first shape is replicated in a first direction, the continuous surface comprising replicas of the first shape that fit together and / or abut one another.

6. A driver as claimed in any one of the preceding claims, wherein the first shape comprises a third side (1513) and an opposing fourth side (1514), wherein the third side has a shape which corresponds to the fourth side such that the third side is suitable for fitting into / interlocking with the fourth side.

7. A driver as claimed in any one of the preceding claims, wherein the first shape is a quadrilateral shape, optionally wherein the first shape is rectangle or square.

8. A driver as claimed in any one of the preceding claims, wherein the hologram is arranged such that a distance between the display device (704) and the holographic reconstruction (756) is 20 millimetre or less, optionally 10 millimetre or less.

9. A driver as claimed in any one of the preceding claims, wherein each contiguous group of pixels comprises less than 100,000 pixels, optionally less than 25,000 pixels.

10. An optical system having a viewing window, wherein the optical system comprises:
a display device (704) arranged to be driven by a driver as claimed in any one of the preceding claims, the display device (704) being further arranged to spatially modulate light in accordance with the hologram displayed thereon to form a holographic wavefront, wherein the holographic wavefront forms the holographic reconstruction (756) downstream of the display device (704);
a waveguide (711) arranged to receive the holographic wavefront and waveguide the holographic wavefront between a pair of reflective surfaces thereof, wherein one surface of the pair of reflective surfaces is partially transmissive such that a plurality of replicas of the holographic wavefront are emitted therefrom.

11. An optical system as claimed in claim 10, wherein the optical system further comprises an optical component (750) between the holographic reconstruction (756) and the waveguide (711), wherein the optical component (750) is arranged to form a virtual image (800) of the holographic reconstruction (756) upstream of the display device (704).

12. An optical system as claimed in claim 11, wherein:
a distance between the holographic reconstruction (756) and the optical component (750) is less than a focal length of the optical component (750) such that the image of the holographic reconstruction is a virtual image formed upstream of the display device (704); or
wherein the optical system further comprises an optical relay (706) between the display device (704) and waveguide (711), the optical relay (706) comprising two lens (708, 710) arranged in cooperation to form a relayed holographic reconstruction (758), wherein the relayed holographic reconstruction (758) is an image of the holographic reconstruction (756) formed by the hologram displayed on the display device (704), and wherein a distance between the relayed holographic reconstruction (758) and the optical component (750) is less than a focal length of the optical component (750) such that the virtual image of the holographic reconstruction formed by the optical component is a virtual image of the relayed holographic reconstruction (758).

13. An optical system as claimed in any one of claims 10 to 12, wherein the optical component (750) is arranged such that the holographic wavefront coupled into the waveguide (711) is a transform of a holographic wavefront encoding the picture, optionally a Fourier transform of the holographic wavefront.

14. A display device comprising a plurality of pixels;
wherein the display device (704) is arranged to display a hologram of a picture on the plurality of pixels such that, when the display device is suitable illuminated, a holographic reconstruction (756) of the picture is formed;
wherein the display device (704) is arranged such that each image point is formed using a contiguous group of pixels of the display device; and
wherein each contiguous group of pixels has a first shape comprising a first side and a second side, wherein the first and second sides are arranged such that, if the first shape is replicated, a respective first side (1511) of a first replica (1521) of the first shape is suitable for cooperating with a respective second side (1512) of a second replica (1522) of the first shape.

15. A method of calculating a hologram of a picture for an optical system comprising a display device arranged to display the hologram, the picture comprising a plurality of image points, the method comprising:
for each image point, defining an area on the display device using straight line paths from the image point to the display device;
determining a sub-hologram for each image point and displaying the sub-hologram on the respective area of the display;
wherein each area on the display device has a first shape comprising a first side and a second side, wherein the first and second sides are arranged such that, if the first shape is replicated, a respective first side of a first replica of the first shape is suitable for cooperating with a respective second side of a second replica of the first shape,
optionally wherein each area comprises a contiguous group of pixels, and the step of displaying the sub-hologram comprises displaying the sub-hologram on the respective contiguous group of pixels.
